# EUROPEAN PATENT APPLICATION

(11) **EP 4 387 278 A1**
(43) Date of publication of application: **19.06.2024**
(21) Application number: 22860294.2
(22) Date of filing: 15.08.2022
(51) Int. Cl.: H04W 4/02, H04W 4/029

(54) **METHOD AND APPARATUS FOR DETERMINING POSITION**

(30) Priority: 24.08.2021 CN 202110975631; 29.04.2022 CN 202210463836
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Isarpatent
(86) International application number: PCT/CN2022/112477
(87) International publication number: WO 2023/024948

(57) **Abstract**

This application provides a location determining method and apparatus. The method may include: A first terminal device receives a first message from a second terminal device, to request a first target location, where the first target location includes at least one of the following: a first relative location, an absolute location of a third terminal device, or a second relative location, the first relative location represents a relative location between the third terminal device and the first terminal device, and the second relative location represents a relative location between the third terminal device and the second terminal device; and the first terminal device sends the first target location to the second terminal device based on the first message. According to this application, the first terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

## Description

This application claims priorities to Chinese Patent Application No. 202110975631.5, filed with the China National Intellectual Property Administration on August 24, 2021 and entitled "LOCATION DETERMINING METHOD AND APPARATUS", and to Chinese Patent Application No. 202210463836.X, filed with the China National Intellectual Property Administration on April 29, 2022 and entitled "LOCATION DETERMINING METHOD AND APPARATUS", both of which are incorporated herein by reference in their entireties.

### TECHNICAL FIELD

This application relates to the communication field, and more specifically, to a location determining method and apparatus.

### BACKGROUND

A relative location between terminal devices may be obtained by measuring a distance and/or an angle between the terminal devices. The distance between the terminal devices may be obtained through distance measurement, and the angle between the terminal devices may be obtained through angle measurement.

A terminal device 1 and a terminal device 2 are used as an example. Currently, a method for distance measurement between the terminal device 1 and the terminal device 2 includes: The terminal device 1 sends a distance measurement signal to the terminal device 2, the terminal device 2 sends a feedback signal to the terminal device 1 after receiving the distance measurement signal, and the terminal device 1 calculates a distance between the terminal device 1 and the terminal device 2 based on a time difference between sending the distance measurement signal and receiving the feedback signal. A method for angle measurement between the terminal device 1 and the terminal device 2 includes: The terminal device 1 sends a signal to the terminal device 2, and calculates an angle between the terminal device 1 and the terminal device 2 by measuring an included angle between a direction in which the terminal device 1 sends the signal and a reference direction or by measuring an included angle between a direction in which the terminal device 2 receives the signal and a reference direction.

However, in some cases, for example, when there is an obstacle between the terminal device 1 and the terminal device 2, line-of-sight transmission cannot be directly performed on a signal between the terminal device 1 and the terminal device 2 because of the existence of the obstacle, a direction in which the terminal device 2 receives a signal is not a real direction in which the terminal device 1 sends the signal, and a signal transmission distance is longer than a real relative distance between the terminal device 1 and the terminal device 2. Using the foregoing distance measurement method or angle measurement method causes low precision of an obtained relative location between the terminal device 1 and the terminal device 2.

### SUMMARY

This application provides a location determining method and apparatus, to improve precision of a relative location between terminal devices.

According to a first aspect, a location determining method is provided. The method may be performed by a terminal device, or may be performed by a component (for example, a chip or a circuit) of a terminal device. This is not limited. For ease of description, the following uses an example in which the method is performed by a first terminal device for description.

The method may include: The first terminal device receives a first message from a second terminal device, where the first message is used to request a first target location, the first target location includes at least one of the following: a first relative location, an absolute location of a third terminal device, or a second relative location, the first relative location represents a relative location between the third terminal device and the first terminal device, and the second relative location represents a relative location between the third terminal device and the second terminal device; and the first terminal device sends a second message to the second terminal device based on the first message, where the second message includes the first target location.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the first terminal device may assist the second terminal device in obtaining the relative location between the third terminal device and the second terminal device. Specifically, the first terminal device receives the first message from the second terminal device, and sends the second message to the second terminal device based on the first message. The second message includes the first target location, and the first target location includes at least one of the following: the relative location between the third terminal device and the first terminal device, the absolute location of the third terminal device, or the relative location between the third terminal device and the second terminal device. According to this embodiment of this application, the first terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the first aspect, in some implementations of the first aspect, the method further includes: The first terminal device determines the first target location.

Based on the foregoing solution, after receiving the first message from the second terminal device, the first terminal device determines the first target location based on the first message, and sends the first target location to the second terminal device.

With reference to the first aspect, in some implementations of the first aspect, the first target location includes the second relative location; and that the first terminal device determines the first target location includes: The first terminal device determines the first relative location; the first terminal device determines a third relative location, where the third relative location represents a relative location between the second terminal device and the first terminal device; and the first terminal device determines the second relative location based on the first relative location and the third relative location.

Based on the foregoing solution, if the first target location includes the relative location between the third terminal device and the second terminal device, the first terminal device may determine the relative location between the third terminal device and the second terminal device based on the relative location between the third terminal device and the first terminal device and the relative location between the second terminal device and the first terminal device.

With reference to the first aspect, in some implementations of the first aspect, the first target location includes the second relative location; and that the first terminal device determines the first target location includes: The first terminal device obtains an absolute location of the second terminal device; the first terminal device obtains the absolute location of the third terminal device; and the first terminal device determines the second relative location based on the absolute location of the second terminal device and the absolute location of the third terminal device.

Based on the foregoing solution, if the first target location includes the relative location between the third terminal device and the second terminal device, the first terminal device may determine the relative location between the third terminal device and the second terminal device based on the absolute location of the second terminal device and the absolute location of the third terminal device.

With reference to the first aspect, in some implementations of the first aspect, the first target location includes the absolute location of the third terminal device; and that the first terminal device determines the first target location includes: The first terminal device determines the first relative location; and the first terminal device determines the absolute location of the third terminal device based on the first relative location and an absolute location of the first terminal device.

Based on the foregoing solution, if the first target location includes the absolute location of the third terminal device, the first terminal device may determine the absolute location of the third terminal device based on the relative location between the third terminal device and the first terminal device and the absolute location of the first terminal device.

With reference to the first aspect, in some implementations of the first aspect, the first message includes at least one of the following: accuracy of the first target location, a threshold of the second relative location, or first information, and the first information is used to trigger the first terminal device to send the first target location to the third terminal device.

With reference to the first aspect, in some implementations of the first aspect, the first message includes the accuracy of the first target location, and the method further includes: The first terminal device determines the first target location based on the accuracy of the first target location.

Based on the foregoing solution, the first message sent by the second terminal device to the first terminal device includes the accuracy of the first target location, and the first terminal device determines the first target location based on the accuracy of the first target location, so that the first target location determined by the first terminal device satisfies the accuracy of the first target location.

With reference to the first aspect, in some implementations of the first aspect, the first target location includes the second relative location, and the method further includes: The first terminal device obtains first accuracy and second accuracy based on the accuracy of the first target location. That the first terminal device determines the first target location based on the accuracy of the first target location includes: The first terminal device determines the first relative location based on the first accuracy; the first terminal device determines a third relative location based on the second accuracy; and the first terminal device determines the second relative location based on the first relative location and the third relative location.

Based on the foregoing solution, if the first message sent by the second terminal device to the first terminal device includes the accuracy of the first target location, the first terminal device determines the relative location between the third terminal device and the second terminal device based on the relative location between the third terminal device and the first terminal device and the relative location between the second terminal device and the first terminal device. In this case, the first terminal device may obtain the first accuracy and the second accuracy based on the accuracy of the first target location, determine the relative location between the third terminal device and the first terminal device based on the first accuracy, and determine the relative location between the second terminal device and the first terminal device based on the second accuracy.

With reference to the first aspect, in some implementations of the first aspect, the first message includes the first information, the first information is used to trigger the first terminal device to send the first target location to the third terminal device, and the method further includes: The first terminal device sends the first target location to the third terminal device.

Based on the foregoing solution, the first message sent by the second terminal device to the first terminal device includes the first information, and after determining the first target location, the first terminal device sends the first target location to the third terminal device based on the first information.

With reference to the first aspect, in some implementations of the first aspect, the first target location includes the second relative location, the first message includes the threshold of the second relative location, and that the first terminal device sends a second message to the second terminal device includes: The first terminal device sends the second message to the second terminal device based on the second relative location and the threshold of the second relative location, where the second message includes the second relative location.

Based on the foregoing solution, the first message sent by the second terminal device to the first terminal device includes the threshold of the second relative location, and after determining the second relative location, the first terminal device sends the second relative location to the second terminal device based on the second relative location and the threshold of the second relative location.

With reference to the first aspect, in some implementations of the first aspect, the method further includes: The first terminal device sends a third message, where the third message is used to broadcast information about a terminal device that establishes a communication connection to the first terminal device, or the third message is used to broadcast information about a terminal device whose location has been learned of by the first terminal device. The third message includes information about the third terminal device.

Based on the foregoing solution, the first terminal device may send the third message, and the third message is used to broadcast information about one or more terminal devices. The one or more terminal devices may be terminal devices that establish a communication connection to the first terminal device, or the first terminal device has learned of absolute locations of the one or more terminal devices, or the first terminal device has learned of relative locations between the first terminal device and the one or more terminal devices.

With reference to the first aspect, in some implementations of the first aspect, the method further includes: The first terminal device receives a fourth message from the second terminal device, where the fourth message is used to discover a terminal device that assists in positioning the third terminal device, and the fourth message includes information about the third terminal device; and if the first terminal device satisfies a preset condition, the first terminal device sends a response message for the fourth message to the second terminal device.

Based on the foregoing solution, the first terminal device receives the fourth message from the second terminal device, where the fourth message is used to discover a terminal device that assists in positioning the third terminal device. If the first terminal device satisfies the preset condition, the first terminal device sends the response message for the fourth message to the second terminal device, so that the second terminal device learns that the first terminal device is a device that assists in positioning the third terminal device.

With reference to the first aspect, in some implementations of the first aspect, the first relative location includes at least one of the following: a distance or an angle.

With reference to the first aspect, in some implementations of the first aspect, the second relative location includes at least one of the following: a distance or an angle.

According to a second aspect, a location determining method is provided. The method may be performed by a terminal device, or may be performed by a component (for example, a chip or a circuit) of a terminal device. This is not limited. For ease of description, the following uses an example in which the method is performed by a second terminal device for description.

The method may include: The second terminal device sends a first message to a first terminal device, where the first message is used to request a first target location, the first target location includes at least one of the following: a first relative location, an absolute location of a third terminal device, or a second relative location, the first relative location represents a relative location between the third terminal device and the first terminal device, and the second relative location represents a relative location between the third terminal device and the second terminal device; the second terminal device receives a second message from the first terminal device, where the second message includes the first target location; and the second terminal device obtains the second relative location based on the second message.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the second terminal device may obtain the relative location between the third terminal device and the second terminal device with assistance of the first terminal device. Specifically, the second terminal device requests the first target location from the first terminal device, and receives the second message from the first terminal device, where the second message includes the first target location. The second terminal device obtains the relative location between the third terminal device and the second terminal device based on the first target location. The first target location includes at least one of the following: the relative location between the third terminal device and the first terminal device, the absolute location of the third terminal device, or the relative location between the third terminal device and the second terminal device. According to this embodiment of this application, the first terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the second aspect, in some implementations of the second aspect, the first message includes at least one of the following: accuracy of the first target location, a threshold of the second relative location, or first information, and the first information is used to trigger the first terminal device to send the first target location to the third terminal device.

With reference to the second aspect, in some implementations of the second aspect, that the second terminal device sends a first message to a first terminal device includes: If a relative location between the third terminal device and the second terminal device that is stored in the second terminal device does not satisfy a preset condition, the second terminal device sends the first message to the first terminal device.

Based on the foregoing solution, when the relative location between the third terminal device and the second terminal device that is stored in the second terminal device does not satisfy the preset condition, the second terminal device obtains the relative location between the third terminal device and the second terminal device with assistance of the first terminal device, that is, the second terminal device sends the first message to the first terminal device.

With reference to the second aspect, in some implementations of the second aspect, the method further includes: The second terminal device receives a third message from the first terminal device, where the third message is used to broadcast information about a terminal device that establishes a communication connection to the first terminal device, or the third message is used to broadcast information about a terminal device whose location has been learned of by the first terminal device. The third message includes information about the third terminal device.

Based on the foregoing solution, the first terminal device may send the third message, and the third message is used to broadcast information about one or more terminal devices. If the one or more terminal devices include the third terminal device, it indicates that the first terminal device is a device that can assist in positioning the third terminal device. Then, the second terminal device sends the first message to the first terminal device. The one or more terminal devices may be terminal devices that establish a communication connection to the first terminal device, or the first terminal device has learned of absolute locations of the one or more terminal devices, or the first terminal device has learned of relative locations between the first terminal device and the one or more terminal devices.

With reference to the second aspect, in some implementations of the second aspect, before the second terminal device sends the first message to the first terminal device, the method further includes: The second terminal device sends a fourth message, where the fourth message is used to discover a terminal device that assists in positioning the third terminal device, and the fourth message includes information about the third terminal device; and the second terminal device receives a response message for the fourth message from the first terminal device.

Based on the foregoing solution, the second terminal device sends the fourth message, and the fourth message is used to discover a terminal device that assists in positioning the third terminal device. After the second terminal device receives the response message for the fourth message from the first terminal device, it indicates that the first terminal device is a device that can assist in positioning the third terminal device. Then, the second terminal device sends the first message to the first terminal device.

With reference to the second aspect, in some implementations of the second aspect, the second relative location includes at least one of the following: a distance or an angle.

According to a third aspect, a location determining method is provided. The method may be performed by a network device, or may be performed by a component (for example, a chip or a circuit) of a network device. This is not limited.

The method may include: The network device receives a fifth message from a second terminal device, where the fifth message is used to trigger sending of a second target location to the second terminal device, the second target location includes at least one of the following: a second relative location or an absolute location of a third terminal device, and the second relative location represents a relative location between the third terminal device and the second terminal device; and the network device sends a sixth message to the second terminal device based on the fifth message, where the sixth message includes the second target location.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the network device may assist the second terminal device in obtaining the relative location between the third terminal device and the second terminal device. Specifically, the network device receives the fifth message from the second terminal device, and sends the sixth message to the second terminal device, where the sixth message includes the second target location, and the second target location includes at least one of the following: the absolute location of the third terminal device, or the relative location between the third terminal device and the second terminal device. According to this embodiment of this application, the network device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the third aspect, in some implementations of the third aspect, the method further includes: The network device determines the second target location.

With reference to the third aspect, in some implementations of the third aspect, the second target location includes the second relative location; and that the network device determines the second target location includes: The network device determines an absolute location of the second terminal device; the network device determines the absolute location of the third terminal device; and the network device determines the second relative location based on the absolute location of the second terminal device and the absolute location of the third terminal device.

Based on the foregoing solution, if the second target location includes the relative location between the third terminal device and the second terminal device, the network device may determine the relative location between the third terminal device and the second terminal device based on the absolute location of the second terminal device and the absolute location of the third terminal device.

With reference to the third aspect, in some implementations of the third aspect, the fifth message includes at least one of the following: accuracy of the second target location, a threshold of the second relative location, or second information, and the second information is used to trigger the network device to send the second target location to the third terminal device.

With reference to the third aspect, in some implementations of the third aspect, the fifth message includes the accuracy of the second target location, and the method further includes: The network device determines the second target location based on the accuracy of the second target location.

Based on the foregoing solution, the fifth message sent by the second terminal device to the network device includes the accuracy of the second target location, and the network device determines the second target location based on the accuracy of the second target location, so that the second target location determined by the network device satisfies the accuracy of the second target location.

With reference to the third aspect, in some implementations of the third aspect, the second target location includes the absolute location of the third terminal device and an absolute location of the second terminal device; and that the network device determines the second target location based on the accuracy of the second target location includes: The network device obtains third accuracy and fourth accuracy based on the accuracy of the second target location; the network device determines the absolute location of the second terminal device based on the third accuracy; and the network device determines the absolute location of the third terminal device based on the fourth accuracy.

Based on the foregoing solution, if the fifth message sent by the second terminal device to the network device includes the accuracy of the second target location, the network device determines the relative location between the third terminal device and the second terminal device based on the absolute location of the second terminal device and the absolute location of the third terminal device. In this case, the network device may obtain the third accuracy and the fourth accuracy based on the accuracy of the second target location, determine the absolute location of the second terminal device based on the third accuracy, and determine the absolute location of the third terminal device based on the fourth accuracy.

With reference to the third aspect, in some implementations of the third aspect, the fifth message includes the second information, the second information is used to trigger the network device to send the second target location to the third terminal device, and the method further includes: The network device sends the second target location to the third terminal device.

Based on the foregoing solution, the fifth message sent by the second terminal device to the network device includes the second information, and after determining the second target location, the network device sends the second target location to the third terminal device based on the second information.

With reference to the third aspect, in some implementations of the third aspect, the second target location includes the second relative location, the fifth message includes the threshold of the second relative location, and that the network device sends a sixth message to the second terminal device includes: The network device sends the sixth message to the second terminal device based on the second relative location and the threshold of the second relative location, where the sixth message includes the second relative location.

Based on the foregoing solution, the fifth message sent by the second terminal device to the network device includes the threshold of the second relative location, and after determining the second relative location, the network device sends the second relative location to the second terminal device based on the second relative location and the threshold of the second relative location.

With reference to the third aspect, in some implementations of the third aspect, the second relative location includes at least one of the following: a distance or an angle.

According to a fourth aspect, a location determining method is provided. The method may be performed by a terminal device, or may be performed by a component (for example, a chip or a circuit) of a terminal device. This is not limited. For ease of description, the following uses an example in which the method is performed by a second terminal device for description.

The method may include: The second terminal device sends a fifth message to a network device, where the fifth message is used to trigger sending of a second target location to the second terminal device, the second target location includes at least one of the following: a second relative location or an absolute location of a third terminal device, and the second relative location represents a relative location between the third terminal device and the second terminal device; the second terminal device receives a sixth message from the network device, where the sixth message includes the second target location; and the second terminal device obtains the second relative location based on the sixth message.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the second terminal device may obtain the relative location between the third terminal device and the second terminal device with assistance of the network device. Specifically, the second terminal device requests the second target location from the network device, and receives the sixth message from the network device. The sixth message includes the second target location. The second terminal device obtains the relative location between the third terminal device and the second terminal device based on the second target location. The second target location includes at least one of the following: the absolute location of the third terminal device or the relative location between the third terminal device and the second terminal device. According to this embodiment of this application, the network device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the fourth aspect, in some implementations of the fourth aspect, the fifth message includes at least one of the following: accuracy of the second target location, a threshold of the second relative location, or second information, and the second information is used to trigger the network device to send the second target location to the third terminal device.

With reference to the fourth aspect, in some implementations of the fourth aspect, that the second terminal device sends a fifth message to a network device includes: If a relative location between the third terminal device and the second terminal device that is stored in the second terminal device does not satisfy a preset condition, the second terminal device sends the fifth message to the network device.

With reference to the fourth aspect, in some implementations of the fourth aspect, the second relative location includes at least one of the following: a distance or an angle.

According to a fifth aspect, a location determining method is provided. The method may be performed by an application function (application function, AF) (for example, a location service (location services, LCS) client), or may be performed by a component (for example, a chip or a circuit) of an AF. This is not limited. For ease of description, the following uses an example in which the method is performed by an AF for description.

The method may include: The AF sends a ninth message to a network device, where the ninth message is used to request a second relative location, and the second relative location represents a relative location between a third terminal device and a second terminal device; and the AF receives the second relative location from the network device.

Based on the foregoing solution, the AF may request a relative location between two terminal devices from the network device, to obtain the relative location between the two terminal devices with assistance of the network device. In this embodiment of this application, the network device determines the relative location between the third terminal device and the second terminal device based on the request of the AF, so that relative positioning between the second terminal device and the third terminal device can be implemented.

With reference to the fifth aspect, in some implementations of the fifth aspect, before the AF sends the ninth message to the network device, the method further includes: The AF receives a tenth message from the second terminal device, where the tenth message is used to request the second relative location.

According to a sixth aspect, a location determining method is provided. The method may be performed by a network device, or may be performed by a component (for example, a chip or a circuit) of a network device. This is not limited.

The method may include: The network device receives a ninth message from an AF, where the ninth message is used to request a second relative location, and the second relative location represents a relative location between a third terminal device and a second terminal device; the network device determines the second relative location based on the ninth message; and the network device sends the second relative location to the AF.

For example, the network device may be a network exposure function (network exposure function, NEF) or a gateway mobile location center (gateway mobile location center, GMLC).

With reference to the sixth aspect, in some implementations of the sixth aspect, that the network device determines the second relative location includes: The network device determines an absolute location of the second terminal device and an absolute location of the third terminal device; and the network device determines the second relative location based on the absolute location of the second terminal device and the absolute location of the third terminal device.

Based on the foregoing solution, the network device determines the relative location between the two terminal devices based on the request of the AF, and sends the relative location between the two terminal devices to the AF. In this embodiment of this application, the network device determines the relative location between the third terminal device and the second terminal device based on the request of the AF, so that relative positioning between the second terminal device and the third terminal device can be implemented.

With reference to the fifth aspect or the sixth aspect, in some implementations, the ninth message includes at least one of the following: accuracy of the second relative location or a threshold of the second relative location.

With reference to the fifth aspect or the sixth aspect, in some implementations, the second relative location includes at least one of the following: a distance or an angle.

According to a seventh aspect, a location determining method is provided. The method may be performed by a terminal device, or may be performed by a component (for example, a chip or a circuit) of a terminal device. This is not limited. For ease of description, the following uses an example in which the method is performed by a second terminal device for description.

The method may include: The second terminal device sends an eleventh message to a third terminal device, where the eleventh message is used to trigger the third terminal device to send a first relative location, and the first relative location represents a relative location between the third terminal device and a first terminal device; the second terminal device receives a twelfth message from the third terminal device, where the twelfth message includes the first relative location; and the second terminal device determines a second relative location based on the first relative location and a third relative location, where the third relative location represents a relative location between the second terminal device and the first terminal device, and the second relative location represents a relative location between the third terminal device and the second terminal device.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the second terminal device may obtain the relative location between the third terminal device and the second terminal device with assistance of the third terminal device. Specifically, the second terminal device receives the twelfth message from the third terminal device, where the twelfth message includes the relative location between the third terminal device and the first terminal device. The second terminal device determines the relative location between the third terminal device and the second terminal device based on the relative location between the third terminal device and the first terminal device and the relative location between the second terminal device and the first terminal device. According to this embodiment of this application, the third terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the seventh aspect, in some implementations of the seventh aspect, the method further includes: The second terminal device determines the third relative location.

With reference to the seventh aspect, in some implementations of the seventh aspect, the method further includes: The eleventh message includes accuracy of the first relative location.

With reference to the seventh aspect, in some implementations of the seventh aspect, before the second terminal device sends the eleventh message to the third terminal device, the method further includes: The first terminal device obtains the accuracy of the first relative location and accuracy of the third relative location based on accuracy of the second relative location.

With reference to the seventh aspect, in some implementations of the seventh aspect, the method further includes: The second terminal device receives a third message from the first terminal device, where the third message is used to broadcast information about a terminal device that establishes a communication connection to the first terminal device, or the third message is used to broadcast information about a terminal device whose location has been learned of by the first terminal device. The third message includes information about the third terminal device.

Based on the foregoing solution, the first terminal device may send the third message, and the third message is used to broadcast information about one or more terminal devices. If the one or more terminal devices include the third terminal device, it indicates that the first terminal device is a device that can assist in positioning the third terminal device. Then, the second terminal device sends the eleventh message to the third terminal device. The one or more terminal devices may be terminal devices that establish a communication connection to the first terminal device, or the first terminal device has learned of absolute locations of the one or more terminal devices, or the first terminal device has learned of relative locations between the first terminal device and the one or more terminal devices.

With reference to the seventh aspect, in some implementations of the seventh aspect, before the second terminal device sends the eleventh message to the third terminal device, the method further includes: The second terminal device sends a fourth message, where the fourth message is used to discover a terminal device that assists in positioning the third terminal device, and the fourth message includes information about the third terminal device; and the second terminal device receives a response message for the fourth message from the first terminal device.

Based on the foregoing solution, the second terminal device sends the fourth message, and the fourth message is used to discover a terminal device that assists in positioning the third terminal device. After the second terminal device receives the response message for the fourth message from the first terminal device, it indicates that the first terminal device is a device that can assist in positioning the third terminal device. Then, the second terminal device sends the eleventh message to the third terminal device.

With reference to the seventh aspect, in some implementations of the seventh aspect, the method further includes: The eleventh message includes information about the first terminal device.

With reference to the seventh aspect, in some implementations of the seventh aspect, the eleventh message includes a positioning time, and the positioning time represents a time for determining the first relative location.

Based on the foregoing solution, the second terminal device and the third terminal device may respectively obtain the third relative location and the first relative location based on the positioning time. This improves positioning accuracy.

With reference to the seventh aspect, in some implementations of the seventh aspect, the method further includes: The first relative location includes at least one of the following: a distance or an angle; the second relative location includes at least one of the following: a distance or an angle; and the third relative location includes at least one of the following: a distance or an angle.

According to an eighth aspect, a location determining method is provided. The method may be performed by a terminal device, or may be performed by a component (for example, a chip or a circuit) of a terminal device. This is not limited. For ease of description, the following uses an example in which the method is performed by a third terminal device for description.

The method may include: The third terminal device receives an eleventh message from a second terminal device, where the eleventh message is used to trigger the third terminal device to send a first relative location, and the first relative location represents a relative location between the third terminal device and a first terminal device; and the third terminal device sends a twelfth message to the second terminal device, where the twelfth message includes the first relative location.

In a scenario in which there is an obstacle between the second terminal device and the third terminal device, line-of-sight transmission cannot be directly performed on a signal between the second terminal device and the third terminal device because of the existence of the obstacle. If the second terminal device uses the foregoing distance measurement method or angle measurement method, precision of an obtained relative location between the second terminal device and the third terminal device is low. In this embodiment of this application, the second terminal device may obtain the relative location between the third terminal device and the second terminal device with assistance of the third terminal device. Specifically, the third terminal device sends the twelfth message to the second terminal device, where the twelfth message includes the relative location between the third terminal device and the first terminal device. In this way, the second terminal device may determine the relative location between the third terminal device and the second terminal device based on the relative location between the third terminal device and the first terminal device and the relative location between the second terminal device and the first terminal device. According to this embodiment of this application, the third terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

With reference to the eighth aspect, in some implementations of the eighth aspect, the method further includes: The third terminal device determines the first relative location.

With reference to the eighth aspect, in some implementations of the eighth aspect, the eleventh message includes accuracy of the first relative location; and that the third terminal device determines the first relative location includes: The third terminal device determines the first relative location based on the accuracy of the first relative location.

With reference to the eighth aspect, in some implementations of the eighth aspect, the eleventh message includes information about the first terminal device.

With reference to the eighth aspect, in some implementations of the eighth aspect, the eleventh message includes a positioning time, the positioning time represents a time for determining the first relative location, and that the third terminal device determines the first relative location includes: The third terminal device determines the first relative location based on the positioning time.

With reference to the eighth aspect, in some implementations of the eighth aspect, the first relative location includes at least one of the following: a distance or an angle.

According to a ninth aspect, a location determining apparatus is provided. The apparatus is configured to perform the method in any one of the possible implementations of the first aspect to the eighth aspect. Specifically, the apparatus may include units and/or modules configured to perform the method in any one of the possible implementations of the first aspect to the eighth aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a tenth aspect, a location determining apparatus is provided. The apparatus includes at least one processor, configured to execute a computer program or instructions stored in a memory, to perform the method in any one of the possible implementations of the first aspect, the second aspect, the fourth aspect, the seventh aspect, and the eighth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in a terminal device.

According to an eleventh aspect, a location determining apparatus is provided. The apparatus includes at least one processor, configured to execute a computer program or instructions stored in a memory, to perform the method in any one of the possible implementations of the third aspect or the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in a network device.

According to a twelfth aspect, a location determining apparatus is provided. The apparatus includes at least one processor, configured to execute a computer program or instructions stored in a memory, to perform the method in any one of the possible implementations of the fifth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, an AF).

In another implementation, the apparatus is a chip, a chip system, or a circuit used in a device.

According to a thirteenth aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fourteenth aspect, a computer-readable storage medium is provided. The computer-readable storage medium stores program code to be executed by a device, and the program code is used to perform the method in any one of the possible implementations of the first aspect to the eighth aspect.

According to a fifteenth aspect, a computer program product including instructions is provided. When the computer program product runs on a computer, the computer is enabled to perform the method in any one of the possible implementations of the first aspect to the eighth aspect.

According to a sixteenth aspect, a location determining system is provided, including one or more of the first terminal device, the second terminal device, the third terminal device, the network device, and the AF described above.

### BRIEF DESCRIPTION OF DRAWINGS

FIG. 1 is a schematic diagram of a network architecture;
FIG. 2 is a schematic diagram of another network architecture;
FIG. 3 is a schematic diagram of a location determining method 300 according to an embodiment of this application;
FIG. 4 is a schematic diagram of another location determining method 400 according to an embodiment of this application;
FIG. 5 is a schematic flowchart of a location determining method 500 according to an embodiment of this application;
FIG. 6 is a schematic flowchart of another location determining method 600 according to an embodiment of this application;
FIG. 7 is a schematic flowchart of another location determining method 700 according to an embodiment of this application;
FIG. 8 is a schematic flowchart of another location determining method 800 according to an embodiment of this application;
FIG. 9 is a schematic flowchart of another location determining method 900 according to an embodiment of this application;
FIG. 10 is a schematic flowchart of another location determining method 1000 according to an embodiment of this application;
FIG. 11 is a schematic diagram of another location determining method 1100 according to an embodiment of this application;
FIG. 12 is a schematic flowchart of another location determining method 1200 according to an embodiment of this application;
FIG. 13 is a schematic diagram of a location determining apparatus 1300 according to an embodiment of this application; and
FIG. 14 is a schematic diagram of another location determining apparatus 1400 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

First, a network architecture applicable to this application is briefly described below.

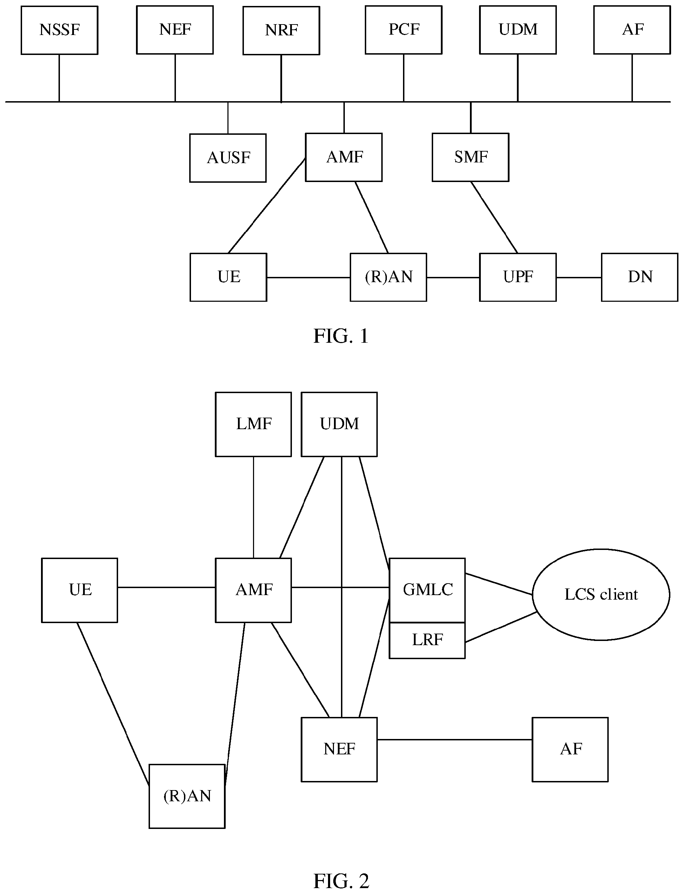

For example, FIG. 1 is a schematic diagram of a network architecture.

As shown in FIG. 1, a 5G system (the 5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the Internet. The NSSF, the AUSF, the UDM, the NEF, the NRF, the PCF, the AF, the AMF, the SMF and the UPF are network elements in a core network. Because a 5G system is used as an example in FIG. 1, the core network may be referred to as a 5G core network (5G core network, 5GC or 5GCN).

The following briefly describes network elements shown in FIG. 1.
1. UE: may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle (uncrewed aerial vehicle, UAV), a UAV controller, a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a terminal device in a 5G network, a terminal device in a future evolved public land mobile network (public land mobile network, PLMN), or the like. This is not limited in embodiments of this application.

By way of example rather than limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, in embodiments of this application, the terminal device may alternatively be a terminal device in an IoT system. IoT is an important part of future information technology development. A main technical feature of IoT is that an article is connected to a network by using a communications technology, to implement an intelligent network of man-machine interconnection and interconnection between things.

It should be noted that a terminal device and an access network device may communicate with each other by using an air interface technology (for example, an NR technology or an LTE technology). Terminal devices may communicate with each other by using an air interface technology (for example, an NR technology or an LTE technology).

In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

2. (Radio) access network ((radio) access network, (R)AN) device: may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection and interworking between a terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. AMF: is mainly used for access control, mobility management, attachment and detachment, and other functions.

4. SMF: is mainly used for user plane network element selection, user plane network element redirection, internet protocol (internet protocol, IP) address allocation for a terminal device, session establishment, modification, and release, and QoS control.

5. UPF: is mainly used for receiving and forwarding of user plane data. For example, the UPF may receive user plane data from a DN, and send the user plane data to a terminal device through an AN device. The UPF may further receive user plane data from the terminal device through the AN device, and forward the user plane data to the DN.

6. NEF: is mainly configured to securely expose services, capabilities, and the like that are provided by 3GPP network functions.

7. PCF: supports a unified policy framework to govern network behavior, and provides policy rule information and the like for control plane network elements (for example, an AMF and an SMF).

8. AF: is mainly configured to provide a service for a 3GPP network, for example, interact with a PCF for policy control.

9. Network slice selection function (network slice selection function, NSSF): is mainly used for network slice selection.

10. UDM: is mainly used for subscription data management of UE, including storage and management of a UE identifier, access authorization of the UE, and the like.

11. DN: is mainly used for an operator network that provides a data service for UE, for example, the internet (Internet), a third-party service network, an IP multimedia service (IP multimedia service, IMS) network, and the like.

12. AUSF: is mainly used for user authentication and the like.

13. NRF: is mainly configured to store a network function entity, description information of a service provided by the network function entity, and the like.

For example, FIG. 2 is a schematic diagram of another network architecture.

As shown in FIG. 2, a 5G location service (location services, LCS) (5G LCS) architecture is used as an example of the network architecture. The network architecture may include but is not limited to UE, an AN device, an AMF, a location management function (location management function, LMF), a UDM, an NEF, a gateway mobile location center (gateway mobile location center, GMLC), a location retrieval function (location retrieval function, LRF) entity, an LCS client (LCS client), and an AF. The LMF is mainly configured to manage and control a location service request of the UE. For example, the LMF may send positioning-related assistance information to the UE based on an LTE positioning protocol (LTE positioning protocol, LPP). The GMLC is mainly configured to expose a location service for an external LCS client. The LRF is mainly configured to obtain UE-related location information for an external LCS client. In a drone scenario, the NEF may also be replaced with an uncrewed aerial system (uncrewed aerial system, UAS) network function (network function, NF) (UAS NF). The UAS NF is mainly used for drone authorization, tracking, and identification. For other network elements in FIG. 2, refer to the foregoing description. Details are not described again.

It should be understood that the network architectures shown in FIG. 1 and FIG. 2 are merely examples for description, and a network architecture applicable to embodiments of this application is not limited thereto. Any network architecture that can implement functions of the foregoing network elements is applicable to embodiments of this application.

It should be further understood that functions or network elements such as the AMF, the SMF, the UPF, the PCF, the UDM, the NSSF, and the AUSF shown in FIG. 1 and FIG. 2 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and other networks in the future. For example, in a 6G network, some or all of the foregoing network elements may still use terms in 5G, or may use other names.

For ease of understanding of embodiments of this application, terms in this application are described briefly.
1. Absolute location (absolute position) of a terminal device: may be a geographical location of the terminal device, may be a specific fixed point, and may be represented by using a coordinate system, for example, a latitude and a longitude.

A manner in which a terminal device obtains an absolute location of the terminal device or another terminal device is not limited in this application. That UE 1 obtains an absolute location is used as an example.

In a possible manner, the UE 1 may obtain an absolute location of the UE 1 from a network side, and the UE 1 may further obtain an absolute location of another terminal device from the network side. For a specific obtaining manner, refer to an existing procedure. Details are not described in this application.

In another possible manner, the UE 1 may determine an absolute location of the UE 1, and the UE 1 may further determine an absolute location of another terminal device.

That the UE 1 determines the absolute location of the UE 1 is used as an example. For example, the UE 1 may determine the absolute location of the UE 1 based on a relative location between the UE 1 and a terminal device and an absolute location of the terminal device by using a geometric calculation method.

That the UE 1 determines an absolute location of a terminal device is used as an example. For example, the UE 1 may determine the absolute location of the terminal device based on a relative location between the UE 1 and the terminal device and an absolute location of the UE 1 by using a geometric calculation method.

It should be noted that the geometric calculation method belongs to the conventional technology, and details are not described in this application.

A manner in which a network device determines an absolute location of a terminal device is not limited in this application. For the manner in which a network device determines an absolute location of a terminal device, refer to an existing procedure. Details are not described in this application.

2. Relative location (relative position) between terminal devices: A terminal device is used as a reference, and a location of another terminal device relative to the terminal device may be referred to as a relative location.

UE 1 and UE 2 are used as an example. A relative location between the UE 1 and the UE 2 may be described as a location of the UE 2 relative to the UE 1 with the UE 1 as a reference, or may be described as a location of the UE 1 relative to the UE 2 with the UE 2 as a reference.

The relative location may include a distance and/or an angle. UE 1 and UE 2 are used as an example. A relative location between the UE 1 and the UE 2 may include at least one of the following: a distance between the UE 1 and the UE 2, or an angle between the UE 1 and the UE 2.

The distance between the UE 1 and the UE 2 may be an absolute distance between the UE 1 and the UE 2.

The angle between the UE 1 and the UE 2 may be an angle of arrival (angle of arrival, AoA), or may be an angle of departure (angle of departure, AoD). The angle of arrival represents an included angle between a direction in which a receive end receives a signal and a reference direction. The angle of departure represents an included angle between a direction in which a transmit end sends a signal and a reference direction.

The reference direction may be a direction determined based on a location and/or a shape of an antenna. In an example, the reference direction may be a direction perpendicular to a normal direction of an antenna array.

A manner of determining a relative location between two terminal devices is not limited in this application. For example, a relative location between UE 1 and UE 2 is determined, and may be specifically obtained by performing relative positioning between the UE 1 and the UE 2. The performing relative positioning between the UE 1 and the UE 2 may include: measuring a distance between the UE 1 and the UE 2, and/or measuring an angle between the UE 1 and the UE 2.

A manner of measuring the distance between the UE 1 and the UE 2 may include: The UE 1 sends a distance measurement signal to the UE 2, the UE 2 sends a feedback signal to the UE 1 after receiving the distance measurement signal, the UE 1 receives the feedback signal, and the UE 1 calculates the distance between the UE 1 and the UE 2 based on a time difference between sending the distance measurement signal and receiving the feedback signal. Specifically, the distance between the UE 1 and the UE 2 is denoted as D, and D may be determined by using the following formula: D = time of flight x speed of light, where the time of flight (time of flight, ToF) satisfies: ToF = Tₚᵣₒₚ = (T_{round} - T_{reply})/2. T_{round} indicates a time length between a time point at which the UE 1 sends the distance measurement signal to the UE 2 and a time point at which the UE 1 receives the feedback signal from the UE 2, and T_{reply} indicates a time length between a time point at which the UE 2 receives the distance measurement signal from the UE 1 and a time point at which the UE 2 sends the feedback signal to the UE 1.

A manner of measuring the angle between the UE 1 and the UE 2 may include: The UE 1 sends a signal to the UE 2, and the UE 2 receives the signal and uses an angle of the UE 1 relative to the UE 2 as the angle between the UE 1 and the UE 2. The angle of the UE 1 relative to the UE 2 may be an included angle between a direction in which the UE 2 receives the signal and a reference direction (that is, an angle of arrival), or may be an included angle between a direction in which the UE 1 sends the signal and the reference direction (that is, an angle of departure).

The foregoing is an example for description, and this application is not limited thereto. For a manner of determining a relative location, refer to an existing procedure. This is not limited.

3. Accuracy (accuracy): A degree of an error between measured data and actual data may be referred to as accuracy.

Accuracy of a location indicates a degree of an error between a measured location and an actual location (or referred to as a real location). If the accuracy is high, it may indicate that the error between the measured location and the actual location is small, that is, the measured location is close to the actual location.

Generally, the accuracy may be a range. If a measurement object includes a distance, the accuracy may be: less than or equal to m, where m is a number greater than 0. Measurement for a distance between UE 1 and UE 2 is used as an example. If m is 0.5 meters, that is, the accuracy is: less than or equal to 0.5 meters, an error between a distance between the UE 1 and the UE 2 that is measured by the UE 1 and an actual distance between the UE 1 and the UE 2 is less than or equal to 0.5 meters.

It may be understood that, when measurement objects include a distance and an angle, there may be two pieces of accuracy. One piece of accuracy is used to measure the distance (for example, the accuracy is less than or equal to 0.5 meters, that is, an error between a measured distance between the UE 1 and the UE 2 and an actual distance between the UE 1 and the UE 2 does not exceed 0.5 meters). The other accuracy is used to measure the angle (for example, the accuracy is less than or equal to 2 degrees, that is, an error between a measured angle between the UE 1 and the UE 2 and an actual angle between the UE 1 and the UE 2 does not exceed 2 degrees).

The accuracy may be used to select an appropriate transmission parameter during measurement. The transmission parameter may include, for example, at least one of the following: a bandwidth for sending a signal and/or receiving a signal during measurement, and a beam for sending a signal and/or receiving a signal during measurement (for example, a beam width for sending a signal and/or receiving a signal). If a measurement object includes a distance between the UE 1 and the UE 2, the transmission parameter may include: a bandwidth for sending a signal and/or receiving a signal in a process of measuring the distance between the UE 1 and the UE 2. Specifically, if the accuracy is high, it indicates that an error between a measured location and an actual location is small. Therefore, when the distance between the UE 1 and the UE 2 is measured, a large bandwidth may be used to send a signal and/or receive a signal (because a larger bandwidth of a signal indicates a shorter slot length for transmitting the signal and a more accurate calculated distance). If a measurement object includes an angle between the UE 1 and the UE 2, the transmission parameter may include: a beam width for sending a signal and/or receiving a signal in a process of measuring the angle between the UE 1 and the UE 2. Specifically, if the accuracy is high, it indicates that an error between a measured location and an actual location is small. Therefore, when the angle between the UE 1 and the UE 2 is measured, a fine beam may be used to send a signal and/or receive a signal (because a finer beam indicates a more accurate direction).

It may be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

The foregoing briefly describes terms used in this application, and details are not described in the following embodiments. In addition, relative location or absolute location determining is mentioned below a plurality of times. For a specific determining manner, refer to the foregoing description. Details are not described in the following embodiments.

The following describes in detail a location determining method provided in embodiments of this application with reference to the accompanying drawings. Embodiments provided in this application may be applied to the network architecture shown in FIG. 1 or FIG. 2. This is not limited.

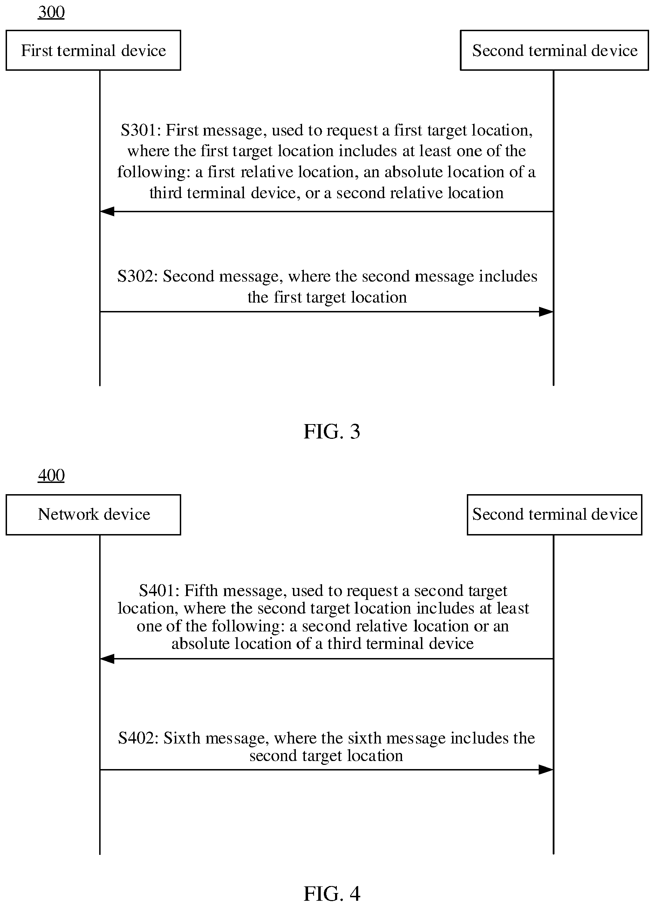

FIG. 3 is a schematic diagram of a location determining method 300 according to an embodiment of this application. The method 300 may include the following steps.

S301: A second terminal device sends a first message to a first terminal device.

Correspondingly, the first terminal device receives the first message from the second terminal device.

The first message may be used to request a first target location. The first target location includes at least one of the following: a first relative location, an absolute location of a third terminal device, or a second relative location.

The first relative location may represent a relative location between the third terminal device and the first terminal device. The first relative location includes at least one of the following: a distance or an angle. Specifically, the first relative location includes at least one of the following: a distance between the third terminal device and the first terminal device, or an angle between the third terminal device and the first terminal device.

The second relative location may represent a relative location between the third terminal device and the second terminal device. The second relative location includes at least one of the following: a distance or an angle. Specifically, the second relative location includes at least one of the following: a distance between the third terminal device and the second terminal device, or an angle between the third terminal device and the second terminal device.

The first message may be an existing message, for example, a proximity-based services communication 5 (proximity-based services communication 5, PC5) radio resource control (radio resource control, RRC) (PC5-RRC) message or PC5 signaling (PC5-signaling, PC5-S); or may be a newly defined message, for example, a location request message (location request message). This is not limited.

S302: The first terminal device sends a second message to the second terminal device based on the first message.

The second message may include the first target location.

For example, if the first message is used to request the first relative location, the second message sent by the first terminal device to the second terminal device includes the first relative location. For another example, if the first message is used to request the absolute location of the third terminal device, the second message sent by the first terminal device to the second terminal device includes the absolute location of the third terminal device. For another example, if the first message is used to request the second relative location, the second message sent by the first terminal device to the second terminal device includes the second relative location.

Correspondingly, the second terminal device receives the second message from the first terminal device, and the second message includes the first target location. Further, the method 300 may include: The second terminal device obtains the second relative location based on the second message. For example, if the second message includes the first relative location, that the second terminal device obtains the second relative location based on the second message includes: The second terminal device determines the second relative location based on the first relative location. For another example, if the second message includes the absolute location of the third terminal device, that the second terminal device obtains the second relative location based on the second message includes: The second terminal device determines the second relative location based on the absolute location of the third terminal device. For another example, if the second message includes the second relative location, that the second terminal device obtains the second relative location based on the second message includes: The second terminal device obtains the second relative location from the second message. It is clear that when the second message includes the second relative location, that the second terminal device obtains the second relative location based on the second message may be understood as directly obtaining the second relative location from the second message. It is clear that, in this case, the step that the second terminal device obtains the second relative location based on the second message may not be performed.

In a scenario in which there is an obstacle between the second terminal device and the third terminal device, line-of-sight transmission cannot be directly performed on a signal between the second terminal device and the third terminal device because of the existence of the obstacle. If the second terminal device directly measures the distance between the second terminal device and the third terminal device by using a distance measurement method, or the second terminal device directly measures the angle between the second terminal device and the third terminal device by using an angle measurement method, precision of an obtained relative location between the second terminal device and the third terminal device is low. According to the method provided in the foregoing embodiment, the first terminal device may assist the second terminal device in obtaining the relative location between the third terminal device and the second terminal device. Specifically, the first terminal device receives the first message from the second terminal device, and sends the second message to the second terminal device based on the first message. The second message includes the first target location, and the first target location includes at least one of the following: the relative location between the third terminal device and the first terminal device, the absolute location of the third terminal device, or the relative location between the third terminal device and the second terminal device. According to the method provided in the foregoing embodiment, the first terminal device assists the second terminal device in obtaining the relative location between the third terminal device and the second terminal device, so that relative positioning between the second terminal device and the third terminal device can be implemented, and precision of the relative location between the third terminal device and the second terminal device can be improved.

Optionally, the method 300 further includes: The first terminal device determines the first target location.

For example, the first terminal device may determine the first target location based on the first message. The first terminal device receives the first message, which triggers the first terminal device to determine the first target location.

The first terminal device may determine the first target location in different implementations. Detailed descriptions are separately provided below.

In a first possible case, the first target location includes the second relative location, and that the first terminal device determines the first target location includes: The first terminal device obtains an absolute location of the second terminal device and the absolute location of the third terminal device; and the first terminal device determines the second relative location based on the absolute location of the second terminal device and the absolute location of the third terminal device.

For example, the first terminal device obtains the absolute location of the second terminal device and the absolute location of the third terminal device, and the first terminal device obtains the relative location between the third terminal device and the second terminal device based on the absolute location of the second terminal device and the absolute location of the third terminal device by using a geometric calculation method.

It should be noted that obtaining a relative location between two terminal devices based on absolute locations of the two terminal devices by using a geometric calculation method belongs to the conventional technology, and details are not described in this application.

For a specific manner of obtaining the absolute location of the second terminal device and the absolute location of the third terminal device, refer to the foregoing description of obtaining an absolute location of another terminal device by the UE 1. Details are not described again.

Further, with reference to the first possible case, that the second terminal device obtains the second relative location based on the second message may include: The second terminal device obtains the second relative location from the second message.

Specifically, the first terminal device determines the second relative location based on the absolute location of the second terminal device and the absolute location of the third terminal device, and sends the second message to the second terminal device, where the second message includes the second relative location. The second terminal device receives the second message from the first terminal device, and the second terminal device may obtain the second relative location from the second message.

In a second possible case, the first target location includes the second relative location, and that the first terminal device determines the first target location includes: The first terminal device determines the first relative location and a third relative location, and determines the second relative location based on the first relative location and the third relative location.

The third relative location may represent a relative location between the second terminal device and the first terminal device. The third relative location includes at least one of the following: a distance or an angle. Specifically, the third relative location includes at least one of the following: a distance between the second terminal device and the first terminal device, or an angle between the second terminal device and the first terminal device.

For example, the first terminal device determines the relative location between the third terminal device and the first terminal device and the relative location between the second terminal device and the first terminal device, and the first terminal device obtains the relative location between the third terminal device and the second terminal device based on the relative location between the third terminal device and the first terminal device and the relative location between the second terminal device and the first terminal device by using a geometric calculation method. In this example, how to obtain the relative location between the third terminal device and the second terminal device by using the geometric calculation method belongs to the conventional technology, and details are not described.

For the relative location between the third terminal device and the first terminal device and the relative location between the second terminal device and the first terminal device, refer to the foregoing description of determining the relative location between the UE 1 and the UE 2. Details are not described again.

Further, with reference to the second possible case, that the second terminal device obtains the second relative location based on the second message may include: The second terminal device obtains the second relative location from the second message.

Specifically, the first terminal device determines the second relative location based on the relative location between the third terminal device and the first terminal device and the relative location between the second terminal device and the first terminal device, and sends the second message to the second terminal device, where the second message includes the second relative location. The second terminal device receives the second message from the first terminal device, and the second terminal device may obtain the second relative location from the second message.

In a third possible case, the first target location includes the absolute location of the third terminal device, and that the first terminal device determines the first target location includes: The first terminal device determines the first relative location, and determines the absolute location of the third terminal device based on the first relative location and an absolute location of the first terminal device.

For example, the first terminal device determines the relative location between the third terminal device and the first terminal device, and the first terminal device obtains the absolute location of the third terminal device based on the relative location between the third terminal device and the first terminal device and the absolute location of the first terminal device by using a geometric calculation method. For the relative location between the third terminal device and the first terminal device, refer to the foregoing description of determining the relative location between the UE 1 and the UE 2. Details are not described again.

For a specific manner of obtaining the absolute location of the first terminal device, refer to the foregoing description of obtaining the absolute location of the UE 1 by the UE 1. Details are not described again.

Further, with reference to the third possible case, that the second terminal device obtains the second relative location based on the second message may include: The second terminal device determines the second relative location based on the absolute location of the third terminal device.

Specifically, the first terminal device determines the absolute location of the third terminal device based on the first relative location and the absolute location of the first terminal device, and sends the second message to the second terminal device, where the second message includes the absolute location of the third terminal device. The second terminal device receives the second message from the first terminal device, and the second terminal device determines the second relative location based on the absolute location of the third terminal device.

That the second terminal device determines the second relative location based on the absolute location of the third terminal device may include: The second terminal device obtains the relative location between the third terminal device and the second terminal device based on the absolute location of the third terminal device and the absolute location of the second terminal device. For a specific manner of obtaining the absolute location of the second terminal device, refer to the foregoing description of obtaining an absolute location of another terminal device by the UE 1. Details are not described again.

In a fourth possible case, the first target location includes the first relative location, and that the first terminal device determines the first target location includes: The first terminal device determines the first relative location.

For determining the relative location between the third terminal device and the first terminal device, refer to the foregoing description of determining the relative location between the UE 1 and the UE 2. Details are not described again.

Further, with reference to the fourth possible case, that the second terminal device obtains the second relative location based on the second message may include: The second terminal device determines the second relative location based on the first relative location.

Specifically, the first terminal device determines the first target location, and sends the second message to the second terminal device, where the second message includes the first relative location. The second terminal device receives the second message from the first terminal device, and the second terminal device determines the second relative location based on the first relative location.

That the second terminal device determines the second relative location based on the first relative location may include: The second terminal device determines the second relative location based on the first relative location and the third relative location. For example, the second terminal device obtains the relative location between the third terminal device and the second terminal device based on the relative location between the third terminal device and the first terminal device and the relative location between the second terminal device and the first terminal device by using a geometric calculation method. The third relative location may be determined by the first terminal device, where for example, the first target location includes the third relative location; or may be determined by the second terminal device. This is not limited. For the relative location between the third terminal device and the first terminal device and the relative location between the second terminal device and the first terminal device, refer to the foregoing description of the relative location between the UE 1 and the UE 2. Details are not described again.

Alternatively, that the second terminal device determines the second relative location based on the first relative location may include: The second terminal device determines the absolute location of the third terminal device based on the first relative location and the absolute location of the first terminal device; and the second terminal device determines the second relative location based on the absolute location of the third terminal device and the absolute location of the second terminal device. For example, the second terminal device determines the absolute location of the third terminal device based on the relative location between the third terminal device and the first terminal device and the absolute location of the first terminal device by using a geometric calculation method, and obtains the relative location between the third terminal device and the second terminal device based on the absolute location of the third terminal device and the absolute location of the second terminal device. For the relative location between the third terminal device and the first terminal device, refer to the foregoing description of the relative location between the UE 1 and the UE 2. Details are not described again. For a specific manner of obtaining the absolute location of the first terminal device, refer to the foregoing description of obtaining the absolute location by the UE 1. Details are not described again.

In a fifth possible case, the first target location includes the first relative location and the absolute location of the third terminal device, and that the first terminal device determines the first target location includes: The first terminal device determines the first relative location and the absolute location of the third terminal device.

For determining, by the first terminal device, the absolute location of the third terminal device, refer to the description in the third possible case. Details are not described again. For determining, by the first terminal device, the first relative location, refer to the description in the fourth possible case. Details are not described again.

Further, with reference to the fifth possible case, that the second terminal device obtains the second relative location based on the second message may include: The second terminal device determines the second relative location based on the first relative location and the absolute location of the third terminal device.

Specifically, the first terminal device determines the first relative location and the absolute location of the third terminal device, and sends the second message to the second terminal device, where the second message includes the first relative location and the absolute location of the third terminal device. The second terminal device receives the second message from the first terminal device, and the second terminal device determines the second relative location based on the first relative location and the absolute location of the third terminal device.

That the second terminal device determines the second relative location based on the first relative location and the absolute location of the third terminal device may include: The second terminal device determines the absolute location of the first terminal device based on the first relative location and the absolute location of the third terminal device; the second terminal device determines the third relative location based on the absolute location of the first terminal device and the absolute location of the second terminal device; and the second terminal device determines the second relative location based on the first relative location and the third relative location. For example, the second terminal device determines the absolute location of the first terminal device based on the relative location between the third terminal device and the first terminal device and the absolute location of the third terminal device by using a geometric calculation method; determines the relative location between the second terminal device and the first terminal device based on the absolute location of the first terminal device and the absolute location of the second terminal device; and obtains the relative location between the third terminal device and the second terminal device based on the relative location between the third terminal device and the first terminal device and the relative location between the second terminal device and the first terminal device. For a specific manner of obtaining the absolute location of the second terminal device, refer to the foregoing description of obtaining the absolute location by the UE 1. Details are not described again.

It may be understood that the foregoing is merely an example for description. This is not limited.

Optionally, in an implementation scenario of the foregoing embodiment, the first message includes at least one of the following: accuracy of the first target location, a threshold of the second relative location, or first information.

In a first example, the first message includes the accuracy of the first target location. Further, optionally, the method 300 further includes: The first terminal device determines the first target location based on the accuracy of the first target location.

The accuracy of the first target location may be used by the first terminal device to select an appropriate transmission parameter in a process of determining the first target location. The transmission parameter may include at least one of the following: a bandwidth for sending a signal and/or receiving a signal, and a beam for sending a signal and/or receiving a signal (for example, a beam width for sending a signal and/or receiving a signal). For example, the first target location includes the second relative location. Specifically, if accuracy of the second relative location is high, it indicates that an error between the measured second relative location and an actual second relative location is small. Therefore, when the second relative location is measured, a signal may be sent and/or a signal may be received by using a large bandwidth (because a larger bandwidth of a signal indicates a shorter slot length for transmitting the signal and a more accurate calculated distance), and/or a signal may be sent and/or a signal may be received by using a fine beam (because a finer beam indicates a more accurate direction).

Optionally, if the first target location in step S301 includes the first relative location and/or the second relative location, the accuracy of the first target location includes at least one of the following: accuracy of a distance or accuracy of an angle. For example, the first target location includes the second relative location. For example, if the accuracy of the distance is less than or equal to m, it indicates that an error between a distance between the third terminal device and the second terminal device that is determined by the first terminal device (or measured by the first terminal device) and an actual distance between the third terminal device and the second terminal device does not exceed m. For another example, if the accuracy of the angle is less than or equal to d (d is, for example, measured in degrees), it indicates that an error between an angle between the third terminal device and the second terminal device that is determined by the first terminal device (or measured by the first terminal device) and an actual angle between the third terminal device and the second terminal device does not exceed d.

Optionally, the first target location in step S301 includes the second relative location, and the method 300 further includes: The first terminal device obtains first accuracy and second accuracy based on the accuracy of the first target location. That the first terminal device determines the first target location based on the accuracy of the first target location may include: The first terminal device determines the first relative location based on the first accuracy; the first terminal device determines a third relative location based on the second accuracy; and the first terminal device determines the second relative location based on the first relative location and the third relative location.

That "the first terminal device obtains first accuracy and second accuracy based on the accuracy of the first target location" may be implemented in the following two manners.

Manner 1: The accuracy of the first target location includes the first accuracy and the second accuracy. That the first terminal device obtains the first accuracy and the second accuracy based on the accuracy of the first target location may be understood as directly obtaining the first accuracy and the second accuracy from the accuracy of the first target location in the first message. It is clear that, in this case, the step that the first terminal device obtains the first accuracy and the second accuracy based on the accuracy of the first target location may not be performed.

Manner 2: The first terminal device determines the first accuracy and the second accuracy based on the accuracy of the first target location.

A distance is used as an example. If the accuracy of the first target location includes accuracy of the distance, and the accuracy of the distance is less than or equal to m, the first terminal device may determine that the first accuracy is less than or equal to *x*₁*m, and the second accuracy is less than or equal to *x*₂*m. *x*₁ and *x*₂ are numbers greater than 0 and less than 1. For example, a sum of *x*₁ and *x*₂ is less than or equal to 1. For example, *x*₁ and *x*₂ are 0.5. Specifically, an error between a distance between the third terminal device and the first terminal device that is determined by the first terminal device and an actual distance between the third terminal device and the first terminal device is less than or equal to *x*₁*m; and an error between a distance between the second terminal device and the first terminal device that is determined by the first terminal device and an actual distance between the second terminal device and the first terminal device is less than or equal to *x*₂*m.

An angle is used as an example. If the accuracy of the first target location includes accuracy of the angle, and the accuracy of the angle is less than or equal to d, the first terminal device may determine that the first accuracy is less than or equal to *y*₁*d, and the second accuracy is less than or equal to *y*₂*d. *y*₁ and *y*₂ are numbers greater than 0 and less than 1. For example, a sum of *y*₁ and *y*₂ is less than or equal to 1. For example, *y*₁ and *y*₂ are 0.5. Specifically, an error between an angle between the third terminal device and the first terminal device that is determined by the first terminal device and an actual angle between the third terminal device and the first terminal device is less than or equal to *y*₁*d; and an error between an angle between the second terminal device and the first terminal device that is determined by the first terminal device and an actual angle between the second terminal device and the first terminal device is less than or equal to *y*₂*d.

For example, the accuracy of the first target location includes the first accuracy, and the first terminal device determines the second accuracy based on the first accuracy, so that the first terminal device obtains the first accuracy and the second accuracy. For example, if the accuracy of the first target location includes the first accuracy, the second accuracy determined by the first terminal device may be the same as or different from the first accuracy. This is not limited.

For another example, the accuracy of the first target location includes the second accuracy, and the first terminal device determines the first accuracy based on the second accuracy, so that the first terminal device obtains the first accuracy and the second accuracy. For example, if the accuracy of the first target location includes the second accuracy, the first accuracy determined by the first terminal device may be the same as or different from the second accuracy. This is not limited.

In a second example, the first message includes the first information. Further, optionally, the method 300 further includes: The first terminal device sends the first target location to the third terminal device.

It should be noted that the second example may be combined with the foregoing examples. This is not limited.

The first information may be used to trigger (or represent, indicate, or notify) the first terminal device to send the first target location to the third terminal device.

Specifically, the first message includes the first information, and the first terminal device learns, based on the first information, that the first target location is to be sent to the third terminal device. Therefore, after determining the first target location, the first terminal device may send the first target location to the third terminal device.

In a possible implementation, the first information is implemented by using one or more bits. For example, it is assumed that whether the first terminal device is to send the first target location to the third terminal device is indicated by using one bit. If the bit is set to "0", it indicates that the first terminal device is to send the first target location to the third terminal device. If the bit is set to "1", it indicates that the first terminal device is not to send the first target location to the third terminal device. It should be understood that the foregoing is merely an example for description. This is not limited.

In a third example, the first message includes the threshold of the second relative location. Further, optionally, step S302 includes: The first terminal device sends the second message to the second terminal device based on the second relative location and the threshold of the second relative location, where the second message includes the second relative location.

It should be noted that the third example may be combined with the foregoing examples. This is not limited.

The threshold of the second relative location may be used by the first terminal device to determine (or confirm) whether to send the second relative location to the second terminal device.

That "the first terminal device sends the second message to the second terminal device based on the second relative location and the threshold of the second relative location, where the second message includes the second relative location" may be understood by using the following examples.

For example, if the second relative location is the distance between the third terminal device and the second terminal device, and the threshold of the second relative location is a distance (which may be referred to as a distance threshold), when the distance between the third terminal device and the second terminal device that is determined by the first terminal device is less than or equal to the distance threshold, the first terminal device sends the second message to the second terminal device, where the second message includes the distance between the third terminal device and the second terminal device.

For another example, if the second relative location is the angle between the third terminal device and the second terminal device, and the threshold of the second relative location is an angle (which may be referred to as an angle threshold), when the angle between the third terminal device and the second terminal device that is determined by the first terminal device is less than or equal to the angle threshold, the first terminal device sends the second message to the second terminal device, where the second message includes the angle between the third terminal device and the second terminal device; or when the angle between the third terminal device and the second terminal device that is determined by the first terminal device is greater than or equal to the angle threshold, the first terminal device sends the second message to the second terminal device, where the second message includes the angle between the third terminal device and the second terminal device.

For another example, if the second relative location includes the angle between the third terminal device and the second terminal device and the distance between the third terminal device and the second terminal device, and the threshold of the second relative location includes an angle threshold and a distance threshold, when the distance between the third terminal device and the second terminal device that is determined by the first terminal device is less than or equal to the distance threshold, and the angle between the third terminal device and the second terminal device that is determined by the first terminal device is less than or equal to the angle threshold, the first terminal device sends the second message to the second terminal device, where the second message includes the distance and the angle between the third terminal device and the second terminal device; or when the distance between the third terminal device and the second terminal device that is determined by the first terminal device is less than or equal to the distance threshold, and the angle between the third terminal device and the second terminal device that is determined by the first terminal device is greater than or equal to the angle threshold, the first terminal device sends the second message to the second terminal device, where the second message includes the distance and the angle between the third terminal device and the second terminal device.

In a fourth example, the first message includes the first information and the threshold of the second relative location. Further, optionally, the method 300 further includes: The first terminal device sends the second relative location to the third terminal device based on the second relative location and the threshold of the second relative location.

For example, if the second relative location is the distance between the third terminal device and the second terminal device, and the threshold of the second relative location is a distance threshold, when the distance between the third terminal device and the second terminal device that is determined by the first terminal device is less than or equal to the distance threshold, if the first message includes the first information, the first terminal device sends the distance between the third terminal device and the second terminal device to the third terminal device.

For another example, if the second relative location is the angle between the third terminal device and the second terminal device, and the threshold of the second relative location is an angle threshold, when the angle between the third terminal device and the second terminal device that is determined by the first terminal device is less than or equal to the angle threshold, if the first message includes the first information, the first terminal device sends the angle between the third terminal device and the second terminal device to the third terminal device; or when the angle between the third terminal device and the second terminal device that is determined by the first terminal device is greater than or equal to the angle threshold, if the first message includes the first information, the first terminal device sends the angle between the third terminal device and the second terminal device to the third terminal device.

It should be noted that a sequence between a determining condition based on the first information and a determining condition based on the threshold of the second relative location may be changed. For example, when the first message includes the first information, if the distance between the third terminal device and the second terminal device that is determined by the first terminal device is less than or equal to the distance threshold, the first terminal device sends the distance between the third terminal device and the second terminal device to the third terminal device.

It may be understood that the foregoing is merely an example for description. This is not limited.

Optionally, in another implementation scenario of the foregoing embodiment, the method 300 further includes: The first terminal device sends a third message.

The third message may be an existing message, for example, a discovery announcement (discovery announcement) message; or may be a newly defined message. This is not limited.

The third message may be used to broadcast information about a terminal device that establishes a communication connection to the first terminal device, or the third message may be used to broadcast information about a terminal device whose location has been learned of by the first terminal device. The terminal device whose location has been learned of by the first terminal device may include at least one of the following: a terminal device whose absolute location has been learned of by the first terminal device, or a terminal device whose relative location with the first terminal device has been learned of by the first terminal device.

The third message includes information about the third terminal device, and the information about the third terminal device may be, for example, an identifier of the third terminal device. Further, step S301 may include: The second terminal device receives the third message from the first terminal device, and if the third message includes the information about the third terminal device, the second terminal device sends the first message to the first terminal device.

For example, the first terminal device establishes a communication connection to one or more terminal devices, and the one or more terminal devices include the third terminal device. The first terminal device sends the third message, the third message is used to broadcast the information about the terminal device that establishes the communication connection to the first terminal device (that is, information about the one or more terminal devices), and the information that is broadcast in the third message and that is about the terminal device that establishes the communication connection to the first terminal device includes the information about the third terminal device (for example, the identifier of the third terminal device). After receiving the third message from the first terminal device, the second terminal device may send the first message to the first terminal device to request the first target location.

For another example, the first terminal device has learned of absolute locations of one or more terminal devices, and the one or more terminal devices include the third terminal device. The first terminal device sends the third message, the third message is used to broadcast information about the terminal device whose absolute location has been learned of by the first terminal device (that is, information about the one or more terminal devices), and the information that is broadcast in the third message and that is about the terminal device whose absolute location has been learned of by the first terminal device includes the information about the third terminal device (for example, the identifier of the third terminal device). After receiving the third message from the first terminal device, the second terminal device may send the first message to the first terminal device to request the first target location, for example, request the absolute location of the third terminal device.

For another example, the first terminal device has learned of relative locations between the first terminal device and one or more terminal devices, and the one or more terminal devices include the third terminal device. The first terminal device sends the third message, the third message is used to broadcast information about the terminal device whose relative location has been learned of by the first terminal device (that is, information about the one or more terminal devices), and the information that is broadcast in the third message and that is about the terminal device whose relative location has been learned of by the first terminal device includes the information about the third terminal device (for example, the identifier of the third terminal device). After receiving the third message from the first terminal device, the second terminal device may send the first message to the first terminal device to request the first target location, for example, request the relative location between the third terminal device and the first terminal device.

Optionally, in another implementation scenario of the foregoing embodiment, the method 300 further includes: The first terminal device receives a fourth message from the second terminal device, and if the first terminal device satisfies a preset condition, the first terminal device sends a response message for the fourth message to the second terminal device.

The fourth message may be used to discover a terminal device that assists in positioning the third terminal device. Specifically, the second terminal device sends (or broadcasts) the fourth message, and the first terminal device receives the fourth message sent by the second terminal device. If the first terminal device satisfies the preset condition, the first terminal device sends the response message for the fourth message to the second terminal device. The response message may indicate that the first terminal device is a device used to assist in positioning. It may be understood that the first terminal device is a device having a sidelink positioning capability.

The fourth message includes the information about the third terminal device, and the information about the third terminal device is used to identify (or learn or determine) that a terminal device that requires assisted positioning is the third terminal device. The information about the third terminal device may be, for example, the identifier of the third terminal device. Optionally, the fourth message further includes capability indication information, and the capability indication information is used to discover a device having a sidelink positioning capability.

It may be understood that the fourth message may be an existing message, for example, a discovery solicitation (discovery solicitation) message; or may be a newly defined message. This is not limited.

If the first terminal device satisfies the preset condition, the first terminal device may send the response message for the fourth message to the second terminal device in the following manners.

Manner 1: If the first terminal device and the third terminal device establish a communication connection, the first terminal device sends the response message for the fourth message to the second terminal device.

Specifically, the second terminal device sends the fourth message, the first terminal device receives the fourth message sent by the second terminal device, the first terminal device identifies the third terminal device based on the information about the third terminal device included in the fourth message, and if the first terminal device and the third terminal device establish the communication connection, the first terminal device sends the response message for the fourth message to the second terminal device. Optionally, that the first terminal device sends the response message for the fourth message to the second terminal device includes: If the first terminal device determines that the first terminal device has a sidelink positioning capability, the first terminal device sends the response message for the fourth message to the second terminal device.

Manner 2: If the first terminal device has learned of the absolute location of the third terminal device, the first terminal device sends the response message for the fourth message to the second terminal device.

Specifically, the second terminal device sends the fourth message, the first terminal device receives the fourth message sent by the second terminal device, the first terminal device identifies the third terminal device based on the information about the third terminal device included in the fourth message, and if the first terminal device has learned of the absolute location of the third terminal device, the first terminal device sends the response message for the fourth message to the second terminal device.

Manner 3: If the first terminal device has learned of the relative location between the first terminal device and the third terminal device, the first terminal device sends the response message for the fourth message to the second terminal device.

Specifically, the second terminal device sends the fourth message, the first terminal device receives the fourth message sent by the second terminal device, the first terminal device identifies the third terminal device based on the information about the third terminal device included in the fourth message, and if the first terminal device has learned of the relative location between the first terminal device and the third terminal device, the first terminal device sends the response message for the fourth message to the second terminal device.

Manner 4: If the first terminal device can discover the third terminal device, the first terminal device sends the response message for the fourth message to the second terminal device.

Specifically, the second terminal device sends the fourth message, the first terminal device receives the fourth message sent by the second terminal device, and the first terminal device sends a seventh message, where the seventh message is used to discover the third terminal device; and if the first terminal device can discover the third terminal device, for example, the first terminal device receives a response message for the seventh message from the third terminal device, the first terminal device sends the response message for the fourth message to the second terminal device. Optionally, that the first terminal device sends the response message for the fourth message to the second terminal device includes: If the first terminal device determines that the first terminal device has a sidelink positioning capability, the first terminal device sends the response message for the fourth message to the second terminal device. It should be understood that, when the first terminal device has the sidelink positioning capability, the first terminal device sends the seventh message, and after receiving the response message for the seventh message, sends the response message for the fourth message to the second terminal device.

It may be understood that the foregoing example in which the first terminal device sends the response message for the fourth message to the second terminal device if the first terminal device satisfies the preset condition is merely for ease of understanding. This application is not limited thereto.

The foregoing describes, with reference to the method 300, a solution in which the first terminal device assists the second terminal device in obtaining the relative location between the third terminal device and the second terminal device. The following describes, with reference to a method 400, a solution in which a network device assists the second terminal device in obtaining the relative location between the third terminal device and the second terminal device.

FIG. 4 is a schematic diagram of another location determining method 400 according to an embodiment of this application. The method 400 may include the following steps.

S401: A second terminal device sends a fifth message to a network device.

Correspondingly, the network device receives the fifth message from the second terminal device.

The fifth message may be used to trigger sending of a second target location to the second terminal device. The second target location includes at least one of the following: a second relative location or an absolute location of a third terminal device. For the second relative location, refer to the foregoing description. Details are not described again.

The fifth message may be an existing message, for example, an uplink non-access stratum (non-access-stratum, NAS) transport (uplink NAS transport) message or a mobile originated location request (mobile originated location request, MO-LR) message; or may be a newly defined message. This is not limited.

S402: The network device sends a sixth message to the second terminal device based on the fifth message, where the sixth message includes the second target location.

For example, if the fifth message is used to trigger sending of the absolute location of the third terminal device to the second terminal device, the network device sends the absolute location of the third terminal device to the second terminal device. For another example, if the fifth message is used to trigger sending of the second relative location to the second terminal device, the network device sends the second relative location to the second terminal device.

Correspondingly, the second terminal device receives the sixth message from the network device, where the sixth message includes the second target location. Further, the method 400 may include: The second terminal device obtains the second relative location based on the sixth message. For example, if the sixth message includes the absolute location of the third terminal device, that the second terminal device obtains the second relative location based on the sixth message includes: The second terminal device determines the second relative location based on the absolute location of the third terminal device. For another example, if the sixth message includes the second relative location, that the second terminal device obtains the second relative location based on the sixth message includes: The second terminal device obtains the second relative location from the sixth message. It is clear that when the sixth message includes the second relative location, that the second terminal device obtains the second relative location based on the sixth message may be understood as directly obtaining the second relative location from the sixth message. It is clear that, in this case, the step that the second terminal device obtains the second relative location based on the sixth message may not be performed.

In a scenario in which there is an obstacle between the second terminal device and the third terminal device, line-of-sight transmission cannot be directly performed on a signal between the second terminal device and the third terminal device because of the existence of the obstacle. If the second terminal device directly measures the distance between the second terminal device and the third terminal device by using a distance measurement method, or the second terminal device directly measures the angle between the second terminal device and the third terminal device by using an angle measurement method, precision of an obtained relative location between the second terminal device and the third terminal device is low. According to the method provided in the foregoing embodiment, the network device may assist the second terminal device in obtaining the relative location between the third terminal device and the second terminal device. Specifically, the network device receives the fifth message from the second terminal device, and sends the sixth message to the second terminal device, where the sixth message includes the second target location, and the second target location includes at least one of the following: the absolute location of the third terminal device, or the relative location between the third terminal device and the second terminal device. According to the method provided in the foregoing embodiment, the network device assists the second terminal device in obtaining the relative location between the third terminal device and the second terminal device, so that relative positioning between the second terminal device and the third terminal device can be implemented, and precision of the relative location between the third terminal device and the second terminal device can be improved.

Optionally, the method 400 further includes: The network device determines the second target location.

For example, the network device may determine the second target location based on the fifth message. The network device receives the fifth message, which triggers the network device to determine the second target location.

The network device may determine the second target location in different implementations. Detailed descriptions are separately provided below.

In a first case, the second target location includes the second relative location, and that the network device determines the second target location includes: The network device determines an absolute location of the second terminal device and the absolute location of the third terminal device; and the network device determines the second relative location based on the absolute location of the second terminal device and the absolute location of the third terminal device.

For example, the network device determines the absolute location of the second terminal device and the absolute location of the third terminal device, and the network device may obtain the relative location between the third terminal device and the second terminal device based on the absolute location of the second terminal device and the absolute location of the third terminal device by using a geometric calculation method. For a manner in which the network device determines an absolute location of a terminal device, refer to an existing procedure. Details are not described again.

It should be noted that obtaining a relative location between two terminal devices based on absolute locations of the two terminal devices by using a geometric calculation method belongs to the conventional technology, and details are not described in this application.

Further, with reference to the first case, that the second terminal device obtains the second relative location based on the sixth message may include: The second terminal device obtains the relative location between the third terminal device and the second terminal device based on the second target location included in the sixth message.

Specifically, the network device determines the second relative location based on the absolute location of the second terminal device and the absolute location of the third terminal device, and sends the sixth message to the second terminal device, where the sixth message includes the second relative location. The second terminal device receives the sixth message from the network device, and the second terminal device may obtain the second relative location from the sixth message.

In a second case, the second target location includes the absolute location of the third terminal device, and that the network device determines the second target location includes: The network device determines the absolute location of the third terminal device.

For a manner in which the network device determines the absolute location of the third terminal device, refer to an existing procedure. Details are not described again.

Further, with reference to the second case, that the second terminal device obtains the second relative location based on the sixth message may include: The second terminal device determines the relative location between the third terminal device and the second terminal device based on the second target location included in the sixth message.

Specifically, the network device determines the absolute location of the third terminal device, and sends the sixth message to the second terminal device, where the sixth message includes the absolute location of the third terminal device. The second terminal device receives the sixth message from the network device, and the second terminal device determines the second relative location based on the absolute location of the third terminal device. For example, the second terminal device may obtain the relative location between the third terminal device and the second terminal device based on the absolute location of the third terminal device and the absolute location of the second terminal device. The absolute location of the second terminal device may be determined by the network device. For example, the second target location includes the absolute location of the second terminal device. For a manner in which the network device determines an absolute location of a terminal device, refer to an existing procedure. Details are not described again.

In a third case, the second target location includes the second relative location and the absolute location of the third terminal device, and that the network device determines the second target location includes: The network device determines the second relative location and the absolute location of the third terminal device.

For a manner in which the network device determines the absolute location of the third terminal device, refer to an existing procedure. Details are not described again. For a manner in which the network device determines the second relative location, refer to the description in the first case. Details are not described again.

Further, with reference to the third case, that the second terminal device obtains the second relative location based on the sixth message may include: The second terminal device obtains the second relative location from the sixth message.

Optionally, in an implementation scenario of the foregoing embodiment, the fifth message includes at least one of the following: accuracy of the second target location, a threshold of the second relative location, or second information.

In a first example, the fifth message includes the accuracy of the second target location. Further, optionally, the method 400 further includes: The network device determines the second target location based on the accuracy of the second target location.

The accuracy of the second target location may be used by the network device to select an appropriate transmission parameter in a process of determining the second target location. The transmission parameter may include at least one of the following: a bandwidth for sending a signal and/or receiving a signal, and a beam for sending a signal and/or receiving a signal (for example, a beam width for sending a signal and/or receiving a signal). For the accuracy of the second target location, refer to the foregoing description. Details are not described again.

Optionally, the second target location in step S401 includes the absolute location of the second terminal device and the absolute location of the third terminal device, and the method 400 further includes: The network device obtains third accuracy and fourth accuracy based on the accuracy of the second target location. That the network device determines the second target location based on the accuracy of the second target location includes: The network device determines the absolute location of the second terminal device based on the third accuracy, and the network device determines the absolute location of the third terminal device based on the fourth accuracy.

That "the network device obtains third accuracy and fourth accuracy based on the accuracy of the second target location" may be implemented in the following two manners.

Manner 1: The accuracy of the second target location includes the third accuracy and the fourth accuracy. That the network device obtains the third accuracy and the fourth accuracy based on the accuracy of the second target location may be understood as directly obtaining the third accuracy and the fourth accuracy from the accuracy of the second target location in the fifth message. It is clear that, in this case, the step that the network device obtains the third accuracy and the fourth accuracy based on the accuracy of the second target location may not be performed.

Manner 2: The network device determines the third accuracy and the fourth accuracy based on the accuracy of the second target location. If the accuracy of the second target location is less than or equal to n, the network device may determine that the third accuracy is less than or equal to zi*n, and the fourth accuracy is less than or equal to *z*₂*n. *z*₁ and *z*₂ are numbers greater than 0 and less than 1. For example, a sum of *z*₁ and *z*₂ is less than or equal to 1. For example, zi is 0.4, and *z*₂ is 0.6. Specifically, an error between the absolute location of the second terminal device that is determined by the network device (or measured by the network device) and an actual absolute location of the second terminal device is less than or equal to zi*n, and an error between the absolute location of the third terminal device that is determined by the network device (or measured by the network device) and an actual absolute location of the third terminal device needs to be less than or equal to *z*₂*n.

For example, the accuracy of the second target location includes the third accuracy, and the network device determines the fourth accuracy based on the third accuracy, so that the network device obtains the third accuracy and the fourth accuracy. For example, if the accuracy of the second target location includes the third accuracy, the fourth accuracy determined by the network device may be the same as or different from the third accuracy. This is not limited.

For another example, the accuracy of the second target location includes the fourth accuracy, and the network device determines the third accuracy based on the fourth accuracy, so that the network device obtains the third accuracy and the fourth accuracy. For example, if the accuracy of the second target location includes the fourth accuracy, the third accuracy determined by the network device may be the same as or different from the fourth accuracy. This is not limited.

In a second example, the fifth message includes the second information. Further, optionally, the method 400 further includes: The network device sends the second target location to the third terminal device.

It should be noted that the second example may be combined with the foregoing examples. This is not limited.

The second information may be used to trigger (or represent, indicate, or notify) the network device to send the second target location to the third terminal device.

Specifically, the fifth message includes the second information, and the network device learns, based on the second information, that the second target location is to be sent to the third terminal device. Therefore, after determining the second target location, the network device may send the second target location to the third terminal device.

In a possible implementation, the second information is implemented by using one or more bits. For example, it is assumed that whether the network device is to send the second target location to the third terminal device is indicated by using one bit. If the bit is set to "0", it indicates that the network device is to send the second target location to the third terminal device. If the bit is set to "1", it indicates that the network device is not to send the second target location to the third terminal device. It should be understood that the foregoing is merely an example for description. This is not limited.

In a third example, the fifth message includes the threshold of the second relative location. Further, optionally, step S402 includes: The network device sends the sixth message to the second terminal device based on the second relative location and the threshold of the second relative location, where the sixth message includes the second relative location.

It should be noted that the third example may be combined with the foregoing examples. This is not limited.

The threshold of the second relative location may be used by the network device to determine (or confirm) whether to send the second relative location to the second terminal device.

That "the network device sends the sixth message to the second terminal device based on the second relative location and the threshold of the second relative location, where the sixth message includes the second relative location" may be understood by using the following examples.

For example, if the second relative location is the distance between the third terminal device and the second terminal device, and the threshold of the second relative location is a distance (which may be referred to as a distance threshold), when the distance between the third terminal device and the second terminal device that is determined by the network device is less than or equal to the distance threshold, the network device sends the sixth message to the second terminal device, where the sixth message includes the distance between the third terminal device and the second terminal device.

For another example, if the second relative location is the angle between the third terminal device and the second terminal device, and the threshold of the second relative location is an angle (which may be referred to as an angle threshold), when the angle between the third terminal device and the second terminal device that is determined by the network device is less than or equal to the angle threshold, the network device sends the sixth message to the second terminal device, where the sixth message includes the angle between the third terminal device and the second terminal device; or when the angle between the third terminal device and the second terminal device that is determined by the network device is greater than or equal to the angle threshold, the network device sends the sixth message to the second terminal device, where the sixth message includes the angle between the third terminal device and the second terminal device.

For another example, if the second relative location includes the angle between the third terminal device and the second terminal device and the distance between the third terminal device and the second terminal device, and the threshold of the second relative location includes an angle threshold and a distance threshold, when the distance between the third terminal device and the second terminal device that is determined by the network device is less than or equal to the distance threshold, and the angle between the third terminal device and the second terminal device that is determined by the network device is less than or equal to the angle threshold, the network device sends the sixth message to the second terminal device, where the sixth message includes the distance and the angle between the third terminal device and the second terminal device; or when the distance between the third terminal device and the second terminal device that is determined by the network device is less than or equal to the distance threshold, and the angle between the third terminal device and the second terminal device that is determined by the network device is greater than or equal to the angle threshold, the network device sends the sixth message to the second terminal device, where the sixth message includes the distance and the angle between the third terminal device and the second terminal device.

In a fourth example, the fifth message includes the second information and the threshold of the second relative location. Further, optionally, the method 400 further includes: The network device sends the second relative location to the third terminal device based on the second relative location and the threshold of the second relative location.

For example, if the second relative location is the distance between the third terminal device and the second terminal device, and the threshold of the second relative location is a distance threshold, when the distance between the third terminal device and the second terminal device that is determined by the network device is less than or equal to the distance threshold, if the fifth message includes the second information, the network device sends the distance between the third terminal device and the second terminal device to the third terminal device.

For another example, if the second relative location is the angle between the third terminal device and the second terminal device, and the threshold of the second relative location is an angle threshold, when the angle between the third terminal device and the second terminal device that is determined by the network device is less than or equal to the angle threshold, if the fifth message includes the second information, the network device sends the angle between the third terminal device and the second terminal device to the third terminal device; or when the angle between the third terminal device and the second terminal device that is determined by the network device is greater than or equal to the angle threshold, if the fifth message includes the second information, the network device sends the angle between the third terminal device and the second terminal device to the third terminal device.

It should be noted that a sequence between a determining condition based on the second information and a determining condition based on the threshold of the second relative location may be changed. For example, when the fifth message includes the second information, if the distance between the third terminal device and the second terminal device that is determined by the network device is less than or equal to the distance threshold, the network device sends the distance between the third terminal device and the second terminal device to the third terminal device.

It may be understood that the foregoing is merely an example for description. This is not limited.

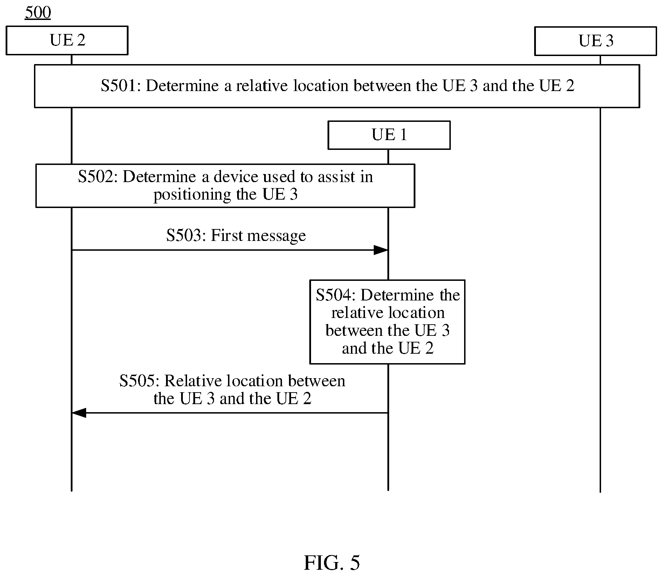

For ease of understanding, the following describes embodiments of this application by using examples with reference to FIG. 5 to FIG. 9. In the following examples, it is assumed that the first terminal device is UE 1, the second terminal device is UE 2, and the third terminal device is UE 3. For specific steps, refer to the foregoing description.

FIG. 5 is a schematic flowchart of a location determining method 500 according to an embodiment of this application. The method 500 may be used in a scenario in which UE 1 determines a relative location between UE 3 and UE 2. The method 500 may include the following steps.

S501: The UE 2 determines the relative location between the UE 3 and the UE 2.

That the UE 2 determines the relative location between the UE 3 and the UE 2 may include: The UE 2 measures at least one of the following: a distance between the UE 3 and the UE 2, or an angle between the UE 3 and the UE 2. For a specific procedure in which the UE 2 determines the relative location between the UE 3 and the UE 2, refer to the foregoing description of the relative location between the UE 1 and the UE 2. Details are not described again.

If the UE 2 cannot determine the relative location between the UE 3 and the UE 2 (for example, the UE 2 is far away from the UE 3, the UE 3 cannot receive a distance measurement signal sent by the UE 2, and therefore the UE 2 cannot determine the relative location between the UE 3 and the UE 2), or if accuracy of the relative location between the UE 2 and the UE 3 is low (for example, the accuracy of the relative location between the UE 3 and the UE 2 is lower than a preset value), the method 500 may further include step S502.

S502: The UE 2 determines a device used to assist in positioning the UE 3.

The UE 2 determines (or discovers) the device (the device may be referred to as UE 1) used to assist in positioning the UE 3. This may be implemented in different implementations. The following separately provides detailed descriptions.

Manner 1: The UE 1 sends a third message, where the third message may be used to broadcast information about UE that establishes a communication connection to the UE 1, or the third message may be used to broadcast information about UE whose location (for example, an absolute location, or a relative location with the UE 1) has been learned of by the UE 1. If the third message includes information about the UE 3, the UE 2 determines that the UE 1 is a device used to assist in positioning the UE 3. Specifically, the UE 1 broadcasts the third message, where the third message includes capability indication information and information about one or more UEs, the capability indication information indicates that the UE 1 has a sidelink positioning capability, the one or more UEs are UEs to which the UE 1 has established a communication connection or UEs whose locations have been learned of by the UE 1, and the one or more UEs include the UE 3. After receiving the third message, if the UE 2 wants to obtain the relative location between the UE 3 and the UE 2, the UE 2 establishes a PC5 connection to the UE 1. For a specific procedure in which the UE 2 establishes the PC5 connection to the UE 1, refer to descriptions in the conventional technology. This is not limited.

Manner 2: The UE 2 sends a fourth message, where the fourth message may be used to discover a device used to assist in positioning the UE 3. If the UE 2 receives a response message for the fourth message from the UE 1, the UE 2 determines that the UE 1 is a device used to assist in positioning the UE 3. Specifically, the UE 2 broadcasts the fourth message, where the fourth message is used to discover a device used to assist in positioning the UE 3, the fourth message includes capability indication information and information about the UE 3 (for example, an ID of the UE 3), and the capability indication information indicates that the device used to assist in positioning the UE 3 needs to have a sidelink positioning capability. After receiving the fourth message, if the UE 1 determines that the UE 1 is not the UE 3 and has a sidelink positioning capability, the UE 1 sends the response message for the fourth message to the UE 2, where the UE 1 is UE used to assist in positioning the UE 3. In a case, the UE 2 sends the fourth message, and a plurality of UEs receive the fourth message. If the plurality of UEs determine that the plurality of UEs are not the UE 3 and have a sidelink positioning capability, the plurality of UEs send eighth messages. The UE 3 may receive eighth messages sent by some or all of the plurality of UEs, and the UE 3 may select the UE 1 from the some or all of the UEs (for example, the UE 1 selected by the UE 3 is UE that performs line-of-sight (line of sight, LOS) communication with the UE 3, that is, the UE 3 receives an eighth message from the UE 1 through LOS). The UE 1 is UE used to assist in positioning the UE 3. The UE 3 returns a response message for the eighth message to the UE 1. After receiving the response message that is for the eighth message and that is returned by the UE 3, the UE 1 sends the response message for the fourth message to the UE 2. Optionally, that the plurality of UEs send the eighth messages to the UE 3 includes: If the plurality of UEs receive the fourth message from the UE 2 through LOS, the plurality of UEs send the eighth messages to the UE 3. For LOS, refer to the conventional technology. This is not limited.

S503: The UE 2 sends a first message to the UE 1.

The first message may be used to request the relative location between the UE 3 and the UE 2. The relative location between the UE 3 and the UE 2 includes at least one of the following: a distance between the UE 3 and the UE 2, or an angle between the UE 3 and the UE 2.

Optionally, the first message includes at least one of the following: accuracy of the relative location between the UE 3 and the UE 2, a threshold of the relative location between the UE 3 and the UE 2, or first information.

The accuracy of the relative location between the UE 3 and the UE 2 may include at least one of the following: accuracy of the distance between the UE 3 and the UE 2, or accuracy of the angle between the UE 3 and the UE 2. For example, the accuracy of the distance between the UE 3 and the UE 2 is less than or equal to m, that is, an error between the measured distance between the UE 3 and the UE 2 and an actual distance between the UE 3 and the UE 2 does not exceed m. For another example, the accuracy of the angle between the UE 3 and the UE 2 is less than or equal to d, that is, an error between the measured angle between the UE 3 and the UE 2 and an actual angle between the UE 3 and the UE 2 does not exceed d.

The threshold of the relative location between the UE 3 and the UE 2 may be used by the UE 1 to determine (or confirm) whether to send the relative location between the UE 3 and the UE 2 to the UE 2. Specifically, the UE 1 sends the relative location between the UE 3 and the UE 2 to the UE 2 based on the relative location between the UE 3 and the UE 2 and the threshold of the relative location between the UE 3 and the UE 2.

The first information may be used to trigger (or represent, indicate, or notify) the UE 1 to send the relative location between the UE 3 and the UE 2 to the UE 3.

For the accuracy, the threshold, and the first information, refer to the foregoing related descriptions. Details are not described again.

S504: The UE 1 determines the relative location between the UE 3 and the UE 2.

The UE 1 may determine the relative location between the UE 3 and the UE 2 in the following manners.

Manner 1: The UE 1 determines the relative location between the UE 3 and the UE 2 based on a relative location between the UE 2 and the UE 1 and a relative location between the UE 3 and the UE 1.

For example, the UE 1 determines the relative location between the UE 2 and the UE 1, the UE 1 determines the relative location between the UE 3 and the UE 1, and the UE 1 determines the relative location between the UE 3 and the UE 2 based on the relative location between the UE 2 and the UE 1 and the relative location between the UE 3 and the UE 1 by using a geometric calculation method.

Manner 2: The UE 1 determines an absolute location of the UE 2 and an absolute location of the UE 3, and determines the relative location between the UE 3 and the UE 2 based on the absolute location of the UE 2 and the absolute location of the UE 3.

For example, the UE 1 determines a relative location between the UE 2 and the UE 1; the UE 1 determines the absolute location of the UE 2 based on the relative location between the UE 2 and the UE 1 and an absolute location of the UE 1; the UE 1 determines a relative location between the UE 3 and the UE 1; and the UE 1 determines the absolute location of the UE 3 based on the relative location between the UE 3 and the UE 1 and the absolute location of the UE 1. It should be understood that the foregoing is an example for description, and this application is not limited thereto. For example, the UE 2 may send the first message that carries the absolute location of the UE 2 to the UE 1.

Optionally, the method 500 further includes: The UE 1 obtains first accuracy and second accuracy based on the accuracy of the relative location between the UE 3 and the UE 2. That the UE 1 determines the relative location between the UE 3 and the UE 1 includes: The UE 1 determines the relative location between the UE 3 and the UE 1 based on the first accuracy. That the UE 1 determines the relative location between the UE 2 and the UE 1 includes: The UE 1 determines the relative location between the UE 2 and the UE 1 based on the second accuracy.

That "the UE 1 obtains first accuracy and second accuracy based on the accuracy of the relative location between the UE 3 and the UE 2" may be implemented in the following two manners.

Manner 1: The accuracy of the relative location between the UE 3 and the UE 2 includes the first accuracy and the second accuracy. That the UE 1 obtains the first accuracy and the second accuracy based on the accuracy of the relative location between the UE 3 and the UE 2 may be understood as directly obtaining the first accuracy and the second accuracy from the accuracy of the relative location between the UE 3 and the UE 2 in the first message. It is clear that, in this case, the step that the UE 1 obtains the first accuracy and the second accuracy based on the accuracy of the relative location between the UE 3 and the UE 2 may not be performed.

Manner 2: The UE 1 determines the first accuracy and the second accuracy based on the accuracy of the relative location between the UE 3 and the UE 2.

A distance is used as an example. If the accuracy of the relative location between the UE 3 and the UE 2 includes accuracy of the distance, and the accuracy of the distance is less than or equal to 1 meter, the UE 1 may determine that the first accuracy is less than 0.4 meters, and the second accuracy is less than 0.6 meters. Specifically, an error between a distance between the UE 3 and the UE 1 that is determined by the UE 1 and an actual distance between the UE 3 and the UE 1 needs to be less than 0.4 meters; and an error between a distance between the UE 2 and the UE 1 that is determined by the UE 1 and an actual distance between the UE 2 and the UE 1 needs to be less than 0.6 meters. It should be understood that 1 meter, 0.4 meters, and 0.6 meters herein are examples for description, and this application is not limited thereto.

An angle is used as an example. If the accuracy of the relative location between the UE 3 and the UE 2 includes accuracy of the angle, and the accuracy of the angle is less than 2 degrees, the UE 1 may determine that the first accuracy is less than 1 degree, and the second accuracy is less than 1 degree. Specifically, an error between an angle between the UE 2 and the UE 1 that is determined by the UE 1 and an actual angle between the UE 2 and the UE 1 needs to be less than 1 degree; and an error between an angle between the UE 3 and the UE 1 that is determined by the UE 1 and an actual angle between the UE 3 and the UE 1 needs to be less than 1 degree. It should be understood that 2 degrees and 1 degree herein are examples for description, and this application is not limited thereto.

For example, the accuracy of the relative location between the UE 3 and the UE 2 includes the first accuracy, and the UE 1 determines the second accuracy based on the first accuracy, so that the UE 1 obtains the first accuracy and the second accuracy. For example, if the accuracy of the relative location between the UE 3 and the UE 2 includes the first accuracy, the second accuracy determined by the UE 1 may be the same as or different from the first accuracy. This is not limited.

For another example, the accuracy of the relative location between the UE 3 and the UE 2 includes the second accuracy, and the UE 1 determines the first accuracy based on the second accuracy, so that the UE 1 obtains the first accuracy and the second accuracy. For example, if the accuracy of the relative location between the UE 3 and the UE 2 includes the second accuracy, the first accuracy determined by the UE 1 may be the same as or different from the second accuracy. This is not limited.

S505: The UE 1 sends the relative location between the UE 3 and the UE 2 to the UE 2.

For example, the UE 1 sends a second message to the UE 2, where the second message includes the relative location between the UE 3 and the UE 2. For the second message, refer to the description in the foregoing method 300. Details are not described again.

Optionally, if the first message in S503 includes the threshold of the relative location between the UE 3 and the UE 2, S505 includes: The UE 1 sends the relative location between the UE 3 and the UE 2 to the UE 2 based on the relative location between the UE 3 and the UE 2 and the threshold of the relative location between the UE 3 and the UE 2.

For example, if the relative location between the UE 3 and the UE 2 includes the distance between the UE 3 and the UE 2, and the threshold of the relative location between the UE 3 and the UE 2 includes a distance threshold, S505 includes: When the distance between the UE 3 and the UE 2 that is determined by the UE 1 is less than or equal to the distance threshold, the UE 1 sends the distance between the UE 3 and the UE 2 to the UE 2.

For another example, if the relative location between the UE 3 and the UE 2 includes the angle between the UE 3 and the UE 2, and the threshold of the relative location between the UE 3 and the UE 2 includes an angle threshold, S505 includes: When the angle between the UE 3 and the UE 2 that is determined by the UE 1 is less than or equal to the angle threshold, the UE 1 sends the angle between the UE 3 and the UE 2 to the UE 2; or when the angle between the UE 3 and the UE 2 that is determined by the UE 1 is greater than or equal to the angle threshold, the UE 1 sends the angle between the UE 3 and the UE 2 to the UE 2.

For another example, if the relative location between the UE 3 and the UE 2 includes the angle between the UE 3 and the UE 2 and the distance between the UE 3 and the UE 2, and the threshold of the relative location between the UE 3 and the UE 2 includes an angle threshold and a distance threshold, S505 includes: When the distance between the UE 3 and the UE 2 that is determined by the UE 1 is less than or equal to the distance threshold, and the angle between the UE 3 and the UE 2 that is determined by the UE 1 is less than or equal to the angle threshold, the UE 1 sends the distance and the angle between the UE 3 and the UE 2 to the UE 2; or when the distance between the UE 3 and the UE 2 that is determined by the UE 1 is less than or equal to the distance threshold, and the angle between the UE 3 and the UE 2 that is determined by the UE 1 is greater than or equal to the angle threshold, the UE 1 sends the distance and the angle between the UE 3 and the UE 2 to the UE 2.

Optionally, if the first message in S503 includes the first information, the method 500 further includes: The UE 1 sends the relative location between the UE 3 and the UE 2 to the UE 3.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the UE 1. Specifically, the UE 2 sends the first message to the UE 1, to request the relative location between the UE 3 and the UE 2. The UE 1 determines the relative location between the UE 3 and the UE 2 based on the first message, and sends the relative location between the UE 3 and the UE 2 to the UE 2. Therefore, not only relative positioning between the UE 2 and the UE 3 can be implemented, but also precision of the relative location between the UE 3 and the UE 2 can be improved.

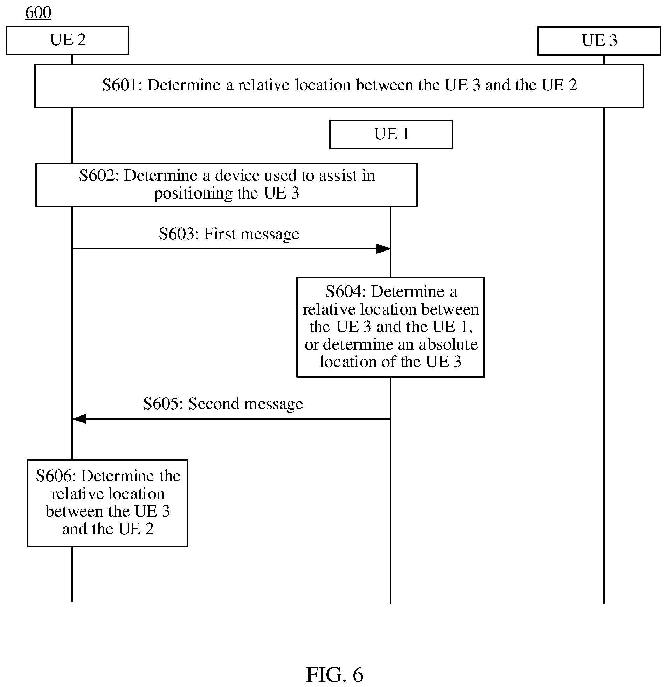

FIG. 6 is a schematic flowchart of another location determining method 600 according to an embodiment of this application. The method 600 may be used in a scenario in which UE 2 determines a relative location between UE 3 and UE 2. The method 600 may include the following steps.

S601: The UE 2 determines the relative location between the UE 3 and the UE 2.

S602: The UE 2 determines a device used to assist in positioning the UE 3.

Steps S601 and S602 are similar to steps S501 and S502, and details are not described herein again.

S603: The UE 2 sends a first message to UE 1.

The first message may be used to request a relative location between the UE 3 and the UE 1, or the first message may be used to request an absolute location of the UE 3. The relative location between the UE 3 and the UE 1 includes at least one of the following: a distance between the UE 3 and the UE 1 or an angle between the UE 3 and the UE 1.

Optionally, if the first message is used to request the relative location between the UE 3 and the UE 1, the first message includes at least one of the following: accuracy of the relative location between the UE 3 and the UE 1, a threshold of the relative location between the UE 3 and the UE 1, or first information.

Optionally, if the first message is used to request the absolute location of the UE 3, the first message includes accuracy of the absolute location of the UE 3 or first information.

For the accuracy, the threshold, and the first information, refer to the foregoing related descriptions. Details are not described again.

S604: The UE 1 determines the relative location between the UE 3 and the UE 1, or the UE 1 determines the absolute location of the UE 3.

In a first case, if the first message in step S603 is used to request the relative location between the UE 3 and the UE 1, S604 includes: The UE 1 determines the relative location between the UE 3 and the UE 1.

In a possible manner, relative positioning is performed between the UE 1 and the UE 3, to determine the relative location between the UE 3 and the UE 1.

Optionally, if the first message includes the accuracy of the relative location between the UE 3 and the UE 1, S604 includes: The UE 1 determines the relative location between the UE 3 and the UE 1 based on the accuracy of the relative location between the UE 3 and the UE 1.

A distance is used as an example. Specifically, if the accuracy of the relative location between the UE 3 and the UE 1 includes accuracy of the distance, and the accuracy of the distance is less than 0.4 meters, an error between the distance between the UE 3 and the UE 1 that is determined by the UE 1 and an actual distance between the UE 3 and the UE 1 is less than 0.4 meters. It should be understood that 0.4 meters herein are used as an example for description, and this application is not limited thereto.

An angle is used as an example. Specifically, if the accuracy of the relative location between the UE 3 and the UE 1 includes accuracy of the angle, and the accuracy of the angle is less than 1 degree, an error between the angle between the UE 3 and the UE 1 that is determined by the UE 1 and an actual angle between the UE 3 and the UE 1 is less than 1 degree. It should be understood that 1 degree herein is an example for description, and this application is not limited thereto.

In a second case, if the first message in step S603 is used to request the absolute location of the UE 3, S604 includes: The UE 1 determines the absolute location of the UE 3.

In a possible manner, relative positioning is performed between the UE 1 and the UE 3, to determine the relative location between the UE 3 and the UE 1. The UE 1 determines the absolute location of the UE 3 based on the relative location between the UE 3 and the UE 1 and an absolute location of the UE 1.

Optionally, if the first message includes the accuracy of the absolute location of the UE 3, S604 includes: The UE 1 determines the absolute location of the UE 3 based on the accuracy of the absolute location of the UE 3. For a manner of determining a location based on accuracy, refer to the foregoing related descriptions. Details are not described herein again.

S605: The UE 1 sends a second message to the UE 2.

In a first case, if the first message in step S603 is used to request the relative location between the UE 3 and the UE 1, S605 includes: The UE 1 sends the second message to the UE 2, where the second message includes the relative location between the UE 3 and the UE 1.

Optionally, if the first message in S603 includes the threshold of the relative location between the UE 3 and the UE 1, S605 includes: The UE 1 sends the relative location between the UE 3 and the UE 1 to the UE 2 based on the relative location between the UE 3 and the UE 1 and the threshold of the relative location between the UE 3 and the UE 1. For details, refer to the implementation in step S505. Details are not described again.

Optionally, if the first message includes the first information, the method 600 further includes: The UE 1 sends the relative location between the UE 3 and the UE 1 to the UE 3.

In a second case, if the first message in step S603 is used to request the absolute location of the UE 3, S605 includes: The UE 1 sends the second message to the UE 2, where the second message includes the absolute location of the UE 3.

Optionally, if the first message includes the first information, the method 600 further includes: The UE 1 sends the absolute location of the UE 3 to the UE 3.

S606: The UE 2 determines the relative location between the UE 3 and the UE 2.

In a first case, the first message in step S603 is used to request the relative location between the UE 3 and the UE 1.

Further, with reference to the first case, S606 may include: The UE 2 determines the relative location between the UE 3 and the UE 2 based on the relative location between the UE 3 and the UE 1 and a relative location between the UE 2 and the UE 1.

The relative location between the UE 2 and the UE 1 may be obtained in the following manners. In one manner, the UE 2 determines the relative location between the UE 2 and the UE 1. Specifically, the UE 2 performs relative positioning with the UE 1, to determine the relative location between the UE 2 and the UE 1. In another manner, the UE 2 obtains the relative location between the UE 2 and the UE 1 from the UE 1. Specifically, the first message further includes the relative location between the UE 2 and the UE 1. The UE 1 determines the relative location between the UE 2 and the UE 1 based on the first message, and sends the relative location between the UE 2 and the UE 1 to the UE 2.

Alternatively, further, with reference to the first case, S606 may include: The UE 2 determines the absolute location of the UE 3 based on the relative location between the UE 3 and the UE 1 and an absolute location of the UE 1; and the UE 2 determines the relative location between the UE 3 and the UE 2 based on the absolute location of the UE 3 and an absolute location of the UE 2.

The absolute location of the UE 1 may be obtained in the following manners. In one manner, the UE 2 may obtain the absolute location of the UE 1 from a network side. In another manner, the UE 2 determines the absolute location of the UE 1. Specifically, the UE 2 determines a relative location between the UE 2 and the UE 1, and determines the absolute location of the UE 1 based on the relative location between the UE 2 and the UE 1 and the absolute location of the UE 2.

In a second case, the first message in step S603 is used to request the absolute location of the UE 3.

Further, with reference to the second case, S606 may include: The UE 2 determines the relative location between the UE 3 and the UE 2 based on the absolute location of the UE 3 and an absolute location of the UE 2.

The absolute location of the UE 2 may be obtained in the following manners. In one manner, the UE 2 may obtain the absolute location of the UE 2 from a network side. In another manner, the UE 2 obtains the absolute location of the UE 2 from the UE 1. Specifically, the first message further includes the absolute location of the UE 2. The UE 1 determines the absolute location of the UE 2 based on the first message, and sends the absolute location of the UE 2 to the UE 2.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the UE 1. Specifically, the UE 2 sends the first message to the UE 1, to request the relative location between the UE 3 and the UE 1. The UE 1 determines the relative location between the UE 3 and the UE 1 based on the first message, and sends the relative location between the UE 3 and the UE 1 to the UE 2. The UE 2 determines the relative location between the UE 3 and the UE 2 based on the relative location between the UE 3 and the UE 1. Alternatively, the UE 2 sends the first message to the UE 1, to request the absolute location of the UE 3. The UE 1 determines the absolute location of the UE 3 based on the first message, and sends the absolute location of the UE 3 to the UE 2. The UE 2 determines the relative location between the UE 3 and the UE 2 based on the absolute location of the UE 3 and the absolute location of the UE 2. Therefore, not only relative positioning between the UE 2 and the UE 3 can be implemented, but also precision of the relative location between the UE 3 and the UE 2 can be improved.

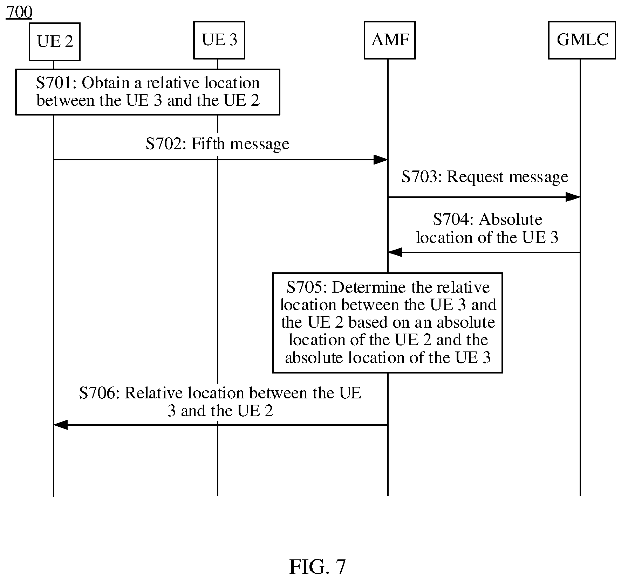

FIG. 7 is a schematic flowchart of another location determining method 700 according to an embodiment of this application. The method 700 may be used in a scenario in which an AMF determines a relative location between UE 3 and UE 2. The method 700 may include the following steps.

S701: The UE 2 determines the relative location between the UE 3 and the UE 2.

Step S701 is similar to step S501, and details are not described herein again.

S702: The UE 2 sends a fifth message to the AMF.

The fifth message may be used to request to trigger sending of the relative location between the UE 3 and the UE 2 to the UE 2.

The fifth message may be an uplink NAS transport message or an MO-LR Request message.

Optionally, the fifth message is represented in a form of a message, and may be specifically a mobile originated location request message or an LTE positioning protocol (positioning protocol, LPP) message.

Optionally, the fifth message is represented in a form of a container (container), and may be specifically a mobile originated location request container.

Optionally, the fifth message includes at least one of the following: accuracy of the relative location between the UE 3 and the UE 2, a threshold of the relative location between the UE 3 and the UE 2, or second information. The second information may be used to trigger (or represent, indicate, or notify) the AMF to send the relative location between the UE 3 and the UE 2 to the UE 3. For the accuracy and the threshold, refer to the foregoing related descriptions. Details are not described again.

Optionally, the AMF learns, from a UDM or a PCF, whether the UE 2 is allowed to obtain an absolute location of the UE 3. Specifically, the AMF obtains an LCS privacy configuration file from the UDM or the PCF. The LCS privacy configuration file may include information about UE that is allowed to obtain the absolute location of the UE 3. If UE allowed to obtain the absolute location of the UE 3 includes the UE 2, the method 700 may further include step S703.

S703: The AMF sends a request message to a GMLC, to request the absolute location of the UE 3.

The request message may be a provide location request (provide location request) message.

Optionally, the AMF sends the request message to the GMLC based on the fifth message. For example, when the fifth message is a mobile originated location request message, the AMF sends the request message to the GMLC.

Optionally, the request message includes accuracy of the absolute location of the UE 3. Specifically, for example, if the fifth message in step S702 includes the accuracy of the relative location between the UE 3 and the UE 2, the request message sent by the AMF to the GMLC in step S803 carries the accuracy of the absolute location of the UE 3, and the accuracy of the absolute location of the UE 3 may be determined based on the accuracy of the relative location between the UE 3 and the UE 2. Specifically, if accuracy of a distance between the UE 3 and the UE 2 is less than or equal to m, the AMF may determine that the accuracy of the absolute location of the UE 3 is less than or equal to *x*₁*m. *x*₁ is a number greater than 0 and less than 1. For example, *x*₁ is 0.5.

Further, based on the request message, the GMLC positions the UE 3, to obtain the absolute location of the UE 3. Optionally, the request message includes the accuracy of the absolute location of the UE 3, and the GMLC positions the UE 3 based on the accuracy of the absolute location of the UE 3. For a specific procedure in which the GMLC positions the UE 3, refer to descriptions in the conventional technology. This is not limited.

S704: The GMLC sends the absolute location of the UE 3 to the AMF.

S705: The AMF determines the relative location between the UE 3 and the UE 2 based on an absolute location of the UE 2 and the absolute location of the UE 3.

Specifically, the AMF determines the absolute location of the UE 2, and may determine the relative location between the UE 3 and the UE 2 based on the absolute location of the UE 2 and the absolute location of the UE 3 by using a geometric calculation method. For a specific procedure in which the AMF determines the absolute location of the UE 2, refer to descriptions in the conventional technology. This is not limited.

S706: The AMF sends the relative location between the UE 3 and the UE 2 to the UE 2.

Optionally, if the fifth message includes the threshold of the relative location between the UE 3 and the UE 2, S706 includes: The AMF sends the relative location between the UE 3 and the UE 2 to the UE 2 based on the relative location between the UE 3 and the UE 2 and the threshold of the relative location between the UE 3 and the UE 2.

For example, if the relative location between the UE 3 and the UE 2 includes the distance between the UE 3 and the UE 2, and the threshold of the relative location between the UE 3 and the UE 2 includes a distance threshold, S706 includes: When the distance between the UE 3 and the UE 2 that is determined by the AMF is less than or equal to the distance threshold, the AMF sends the distance between the UE 3 and the UE 2 to the UE 2.

For another example, if the relative location between the UE 3 and the UE 2 includes the angle between the UE 3 and the UE 2, and the threshold of the relative location between the UE 3 and the UE 2 includes an angle threshold, S706 includes: When the angle between the UE 3 and the UE 2 that is determined by the AMF is less than or equal to the angle threshold, the AMF sends the angle between the UE 3 and the UE 2 to the UE 2; or when the angle between the UE 3 and the UE 2 that is determined by the AMF is greater than or equal to the angle threshold, the AMF sends the angle between the UE 3 and the UE 2 to the UE 2.

For another example, if the relative location between the UE 3 and the UE 2 includes the angle between the UE 3 and the UE 2 and the distance between the UE 3 and the UE 2, and the threshold of the relative location between the UE 3 and the UE 2 includes an angle threshold and a distance threshold, S706 includes: When the distance between the UE 3 and the UE 2 that is determined by the AMF is less than or equal to the distance threshold, and the angle between the UE 3 and the UE 2 that is determined by the AMF is less than or equal to the angle threshold, the AMF sends the distance and the angle between the UE 3 and the UE 2 to the UE 2; or when the distance between the UE 3 and the UE 2 that is determined by the AMF is less than or equal to the distance threshold, and the angle between the UE 3 and the UE 2 that is determined by the AMF is greater than or equal to the angle threshold, the AMF sends the distance and the angle between the UE 3 and the UE 2 to the UE 2.

Optionally, if the fifth message includes the second information, the method 700 further includes: The AMF sends the relative location between the UE 3 and the UE 2 to the UE 3.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the AMF. Specifically, the UE 2 sends the fifth message to the AMF, to request the relative location between the UE 3 and the UE 2. The AMF determines the relative location between the UE 3 and the UE 2 based on the fifth message, and sends the relative location between the UE 3 and the UE 2 to the UE 2. Therefore, not only relative positioning between the UE 2 and the UE 3 can be implemented, but also precision of the relative location between the UE 3 and the UE 2 can be improved.

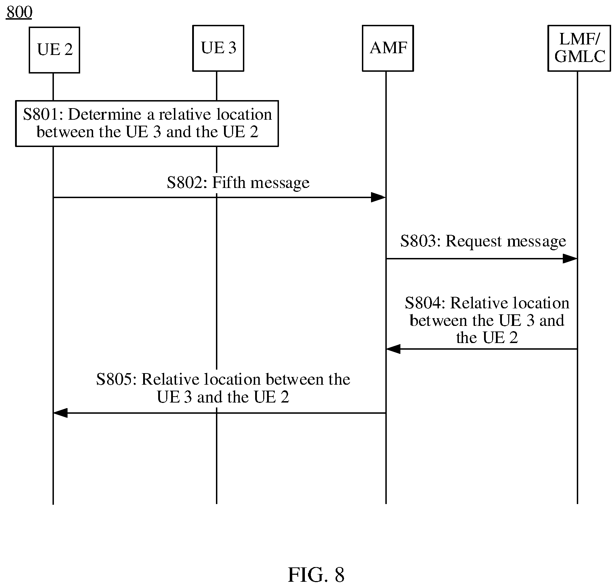

FIG. 8 is a schematic flowchart of another location determining method 800 according to an embodiment of this application. The method 800 may be used in a scenario in which a GMLC or an LMF determines a relative location between UE 3 and UE 2. The method 800 may include the following steps.

S801: The UE 2 determines the relative location between the UE 3 and the UE 2.

S802: The UE 2 sends a fifth message to an AMF.

Steps S801 and S802 are similar to steps S701 and S702, and details are not described herein again.

S803: The AMF sends a request message to the GMLC or the LMF, to request the relative location between the UE 3 and the UE 2.

Optionally, the AMF sends the request message to the GMLC or the LMF based on the fifth message. For example, when the fifth message is a mobile originated location request message, the AMF sends the request message to the GMLC or the LMF.

Optionally, the request message includes accuracy of the relative location between the UE 3 and the UE 2. Specifically, in an example, if the fifth message in step S802 includes the accuracy of the relative location between the UE 3 and the UE 2, the request message sent by the AMF to the GMLC or the LMF in step S803 carries the accuracy of the relative location between the UE 3 and the UE 2. Alternatively, in another example, the AMF determines the accuracy of the relative location between the UE 3 and the UE 2, and the request message sent by the AMF to the GMLC or the LMF in step S803 carries the accuracy of the relative location between the UE 3 and the UE 2.

In a case, the AMF sends the request message to the GMLC, to request the relative location between the UE 3 and the UE 2.

In this case, the request message may be a provide location request message.

Further, based on the request message, the GMLC determines the relative location between the UE 3 and the UE 2. Optionally, the GMLC learns, from a UDM or a PCF, whether the UE 2 is allowed to obtain an absolute location of the UE 3. Specifically, the GMLC obtains an LCS privacy configuration file from the UDM or the PCF. The LCS privacy configuration file may include information about UE that is allowed to obtain the absolute location of the UE 3. That the GMLC determines the relative location between the UE 3 and the UE 2 includes: If UE allowed to obtain the absolute location of the UE 3 includes the UE 2, the GMLC determines the relative location between the UE 3 and the UE 2.

Optionally, if the request message in step S803 includes the accuracy of the relative location between the UE 3 and the UE 2, the GMLC determines the relative location between the UE 3 and the UE 2 based on the accuracy of the relative location between the UE 3 and the UE 2. For a manner of determining a location based on accuracy, refer to the foregoing description. Details are not described again.

Optionally, that the GMLC determines the relative location between the UE 3 and the UE 2 includes: The GMLC determines the relative location between the UE 3 and the UE 2 based on an absolute location of the UE 2 and the absolute location of the UE 3.

Specifically, the GMLC separately positions the UE 2 and the UE 3, and determines the absolute location of the UE 2 and the absolute location of the UE 3. In addition, the GMLC determines the relative location between the UE 3 and the UE 2 based on the absolute location of the UE 2 and the absolute location of the UE 3. For a specific procedure in which the GMLC positions the UE 2 and the UE 3, refer to descriptions in the conventional technology. This is not limited.

In another case, the AMF sends the request message to the LMF, to request the relative location between the UE 3 and the UE 2.

In this case, the request message may be a determine location request (determine location request) message.

Further, based on the request message, the LMF determines the relative location between the UE 3 and the UE 2. Optionally, the LMF learns, from a UDM or a PCF, whether the UE 2 is allowed to obtain an absolute location of the UE 3. Specifically, the LMF obtains an LCS privacy configuration file from the UDM or the PCF. The LCS privacy configuration file may include information about UE that is allowed to obtain the absolute location of the UE 3. That the LMF determines the relative location between the UE 3 and the UE 2 includes: If UE allowed to obtain the absolute location of the UE 3 includes the UE 2, the LMF determines the relative location between the UE 3 and the UE 2.

Optionally, if the request message in step S803 includes the accuracy of the relative location between the UE 3 and the UE 2, the LMF determines the relative location between the UE 3 and the UE 2 based on the accuracy of the relative location between the UE 3 and the UE 2. For a manner of determining a location based on accuracy, refer to the foregoing description. Details are not described again.

Optionally, that the LMF determines the relative location between the UE 3 and the UE 2 includes: The LMF determines the relative location between the UE 3 and the UE 2 based on an absolute location of the UE 2 and the absolute location of the UE 3.

Specifically, the LMF separately positions the UE 2 and the UE 3, and determines the absolute location of the UE 2 and the absolute location of the UE 3. In addition, the LMF determines the relative location between the UE 3 and the UE 2 based on the absolute location of the UE 2 and the absolute location of the UE 3. For a specific procedure in which the LMF positions the UE 2 and the UE 3, refer to descriptions in the conventional technology. This is not limited.

S804: The GMLC or the LMF sends the relative location between the UE 3 and the UE 2 to the AMF.

Specifically, if the AMF sends the request message to the GMLC in step S803, the GMLC sends the relative location between the UE 3 and the UE 2 to the AMF in step S804. If the AMF sends the request message to the LMF in step S803, the LMF sends the relative location between the UE 3 and the UE 2 to the AMF in step S804.

Optionally, if the request message includes the threshold of the relative location between the UE 3 and the UE 2, step S804 includes: The GMLC or the LMF sends the relative location between the UE 3 and the UE 2 to the AMF based on the relative location between the UE 3 and the UE 2 and the threshold of the relative location between the UE 3 and the UE 2. For details, refer to the foregoing description. Details are not described again.

S805: The AMF sends the relative location between the UE 3 and the UE 2 to the UE 2.

Optionally, if the fifth message includes the threshold of the relative location between the UE 3 and the UE 2, step S805 includes: The AMF sends the relative location between the UE 3 and the UE 2 to the UE 2 based on the relative location between the UE 3 and the UE 2 and the threshold of the relative location between the UE 3 and the UE 2. For details, refer to the foregoing description. Details are not described again.

Optionally, if the fifth message includes the second information, the method 800 further includes: The AMF sends the relative location between the UE 3 and the UE 2 to the UE 3.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the GMLC/LMF. Specifically, the UE 2 sends the fifth message to the AMF, to request the relative location between the UE 3 and the UE 2. The AMF sends a request to the GMLC/LMF, to request the GMLC/LMF to determine the relative location between the UE 3 and the UE 2, and sends the relative location between the UE 3 and the UE 2 to the UE 2. Therefore, not only relative positioning between the UE 2 and the UE 3 can be implemented, but also precision of the relative location between the UE 3 and the UE 2 can be improved.

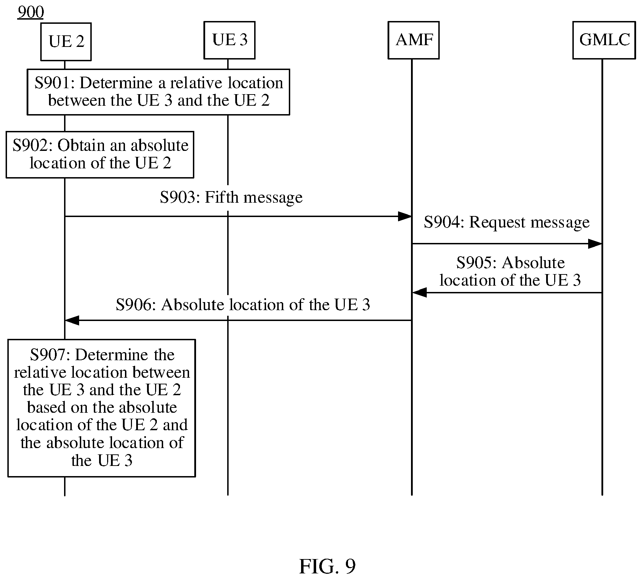

FIG. 9 is a schematic flowchart of another location determining method 900 according to an embodiment of this application. The method 900 may be used in a scenario in which UE 2 determines a relative location between UE 3 and UE 2. A difference between the method 900 and the method 600 lies in that, in the method 600, the UE 1 provides the absolute location of the UE 3, but in the method 900, an AMF provides an absolute location of the UE 3, and the UE 2 determines the relative location between the UE 3 and the UE 2 based on the absolute location of the UE 3 that is provided by the AMF. The method 900 may include the following steps.

S901: The UE 2 determines the relative location between the UE 3 and the UE 2.

Step S901 is similar to step S501, and details are not described herein again.

S902: The UE 2 obtains an absolute location of the UE 2.

Specifically, the UE 2 may obtain the absolute location of the UE 2 from a network side. For a specific procedure, refer to descriptions in the conventional technology. This is not limited.

S903: The UE 2 sends a fifth message to the AMF.

The fifth message is used to trigger sending of the absolute location of the UE 3 to the UE 2.

Optionally, the first message is an uplink NAS transport message or an MO-LR Request message.

Optionally, the fifth message is represented in a form of a message, and may be specifically a mobile originated location request message or an LTE LPP message.

Optionally, the fifth message is represented in a form of a container, and may be specifically a mobile originated location request container.

Optionally, the fifth message includes at least one of the following: accuracy of the absolute location of the UE 3 or second information. The second information may be used to trigger (or represent, indicate, or notify) the AMF to send the absolute location of the UE 3 to the UE 3. For the accuracy, refer to the foregoing related descriptions. Details are not described again.

Optionally, the AMF learns, from a UDM or a PCF, whether the UE 2 is allowed to obtain the absolute location of the UE 3. Specifically, the AMF obtains an LCS privacy configuration file from the UDM or the PCF. The LCS privacy configuration file may include information about UE that is allowed to obtain the absolute location of the UE 3. If UE allowed to obtain the absolute location of the UE 3 includes the UE 2, the method 900 may further include step S904.

S904: The AMF sends a request message to a GMLC.

The request message may be a provide location request message.

Optionally, the AMF sends the request message to the GMLC or an LMF based on the fifth message. For example, when the fifth message is a mobile originated location request message, the AMF sends the request message to the GMLC or the LMF.

Further, based on the request message, the GMLC positions the UE 3, to determine the absolute location of the UE 3. Optionally, if the request message includes the accuracy of the absolute location of the UE 3, the GMLC positions the UE 3 based on the accuracy of the absolute location of the UE 3. For a specific procedure in which the GMLC positions the UE 3, refer to descriptions in the conventional technology. This is not limited.

S905: The GMLC sends the absolute location of the UE 3 to the AMF.

S906: The AMF sends the absolute location of the UE 3 to the UE 2.

Optionally, if the fifth message includes the second information, the method 900 further includes: The AMF sends the absolute location of the UE 3 to the UE 3.

S907: The UE 2 determines the relative location between the UE 3 and the UE 2 based on an absolute location of the UE 2 and the absolute location of the UE 3.

Specifically, the UE 2 may determine the relative location between the UE 3 and the UE 2 based on the absolute location of the UE 2 and the absolute location of the UE 3 by using a geometric calculation method.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the AMF. Specifically, the UE 2 sends the fifth message to the AMF, to request the absolute location of the UE 3. The AMF requests the absolute location of the UE 3 from the GMLC. The GMLC determines the absolute location of the UE 3, and sends the absolute location of the UE 3 to the UE 2 through the AMF. The UE 2 determines the relative location between the UE 3 and the UE 2 based on the absolute location of the UE 3 and the absolute location of the UE 2. Therefore, not only relative positioning between the UE 2 and the UE 3 can be implemented, but also precision of the relative location between the UE 3 and the UE 2 can be improved.

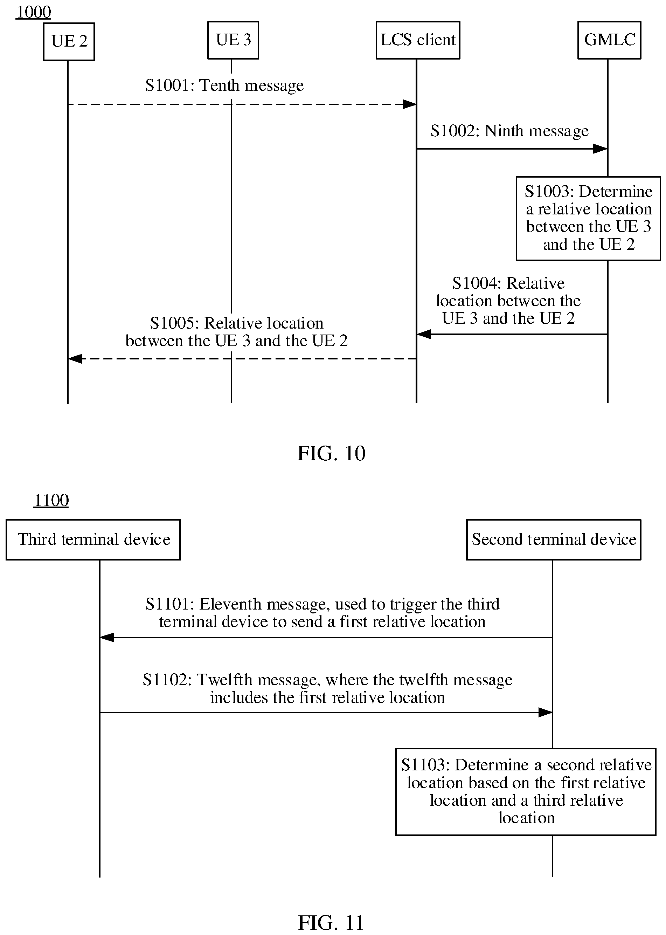

FIG. 10 is a schematic flowchart of another location determining method 1000 according to an embodiment of this application. The method 1000 may be used in a scenario in which an LCS client requests a relative location between UE 3 and UE 2 from a GMLC. The method 1000 may include the following steps.

S1002: The LCS client sends a ninth message to the GMLC.

The ninth message may include an identifier of the UE 2 and an identifier of the UE 3. The identifier may be a generic public subscription identifier (generic public subscription identity, GPSI).

The ninth message may be an LCS service request (LCS service request) message.

Optionally, the ninth message includes at least one of the following: accuracy of the relative location between the UE 3 and the UE 2, or a threshold of the relative location between the UE 3 and the UE 2. For the accuracy and the threshold, refer to the foregoing description. Details are not described again.

Optionally, before step S1002, the method 1000 further includes step S1001. S1001: The UE 2 sends a tenth message to the LCS client. The tenth message is used to request the relative location between the UE 3 and the UE 2. Specifically, the UE 2 may send the tenth message to the LCS client by using an application layer, to request the relative location between the UE 3 and the UE 2. After receiving the tenth message from the UE 2, the LCS client sends the ninth message to the GMLC.

Optionally, that the LCS client sends the ninth message to the GMLC includes: The LCS client sends the ninth message to the GMLC through an NEF.

S1003: The GMLC determines the relative location between the UE 3 and the UE 2.

Optionally, the GMLC learns, from a UDM or a PCF, whether the UE 2 is allowed to obtain an absolute location of the UE 3. Specifically, the GMLC obtains an LCS privacy configuration file from the UDM or the PCF. The LCS privacy configuration file may include information about UE that is allowed to obtain the absolute location of the UE 3. That the GMLC determines the relative location between the UE 3 and the UE 2 includes: If UE allowed to obtain the absolute location of the UE 3 includes the UE 2, the GMLC determines the relative location between the UE 3 and the UE 2.

Optionally, if the ninth message includes the accuracy of the relative location between the UE 3 and the UE 2, the GMLC determines the relative location between the UE 3 and the UE 2 based on the accuracy of the relative location between the UE 3 and the UE 2. For a manner of determining a location based on accuracy, refer to the foregoing description. Details are not described again.

Optionally, that the GMLC determines the relative location between the UE 3 and the UE 2 includes: The GMLC determines the relative location between the UE 3 and the UE 2 based on an absolute location of the UE 2 and the absolute location of the UE 3.

Specifically, the GMLC separately positions the UE 2 and the UE 3, and determines the absolute location of the UE 2 and the absolute location of the UE 3. In addition, the GMLC determines the relative location between the UE 3 and the UE 2 based on the absolute location of the UE 2 and the absolute location of the UE 3. For a specific procedure in which the GMLC positions the UE 2 and the UE 3, refer to descriptions in the conventional technology. This is not limited.

S1004: The GMLC sends the relative location between the UE 3 and the UE 2 to the LCS client.

Optionally, if the ninth message includes the threshold of the relative location between the UE 3 and the UE 2, S1004 includes: The GMLC sends the relative location between the UE 3 and the UE 2 to the UE 2 based on the relative location between the UE 3 and the UE 2 and the threshold of the relative location between the UE 3 and the UE 2. For details, refer to the foregoing description. Details are not described herein again.

Optionally, the method 1000 further includes step S1005. S1005: The LCS client sends the relative location between the UE 3 and the UE 2 to the UE 2.

In a possible case, if the UE 2 sends, to the LCS client in step S1001, the tenth message used to request the relative location between the UE 3 and the UE 2, after receiving the relative location between the UE 3 and the UE 2 from the GMLC, the LCS client sends the relative location between the UE 3 and the UE 2 to the UE 2.

Based on the foregoing solution, the UE 2 may obtain the relative location between the UE 3 and the UE 2 with assistance of the GMLC. Specifically, the UE 2 sends the ninth message to the GMLC through the LCS client, to request the relative location between the UE 3 and the UE 2. The GMLC determines the relative location between the UE 3 and the UE 2 based on the ninth message, and sends the relative location between the UE 3 and the UE 2 to the UE 2. Therefore, not only relative positioning between the UE 2 and the UE 3 can be implemented, but also precision of the relative location between the UE 3 and the UE 2 can be improved.

It may be understood that the method 1000 is mainly described by using an example in which the GMLC determines the relative location between the UE 3 and the UE 2. This application is not limited thereto. In an example, the relative location between the UE 3 and the UE 2 may alternatively be determined by an LMF. Specifically, S1003 may be replaced with the following: The GMLC requests the relative location between the UE 3 and the UE 2 from the LMF through the AMF. The LMF determines the relative location between the UE 3 and the UE 2, and sends the relative location between the UE 3 and the UE 2 to the GMLC.

It may be further understood that, in the method 1000, the relative location between the UE 3 and the UE 2 may alternatively be determined by an NEF. For example, when the LCS client requests the relative location between the UE 3 and the UE 2, the LCS client may request relative positioning from the NEF, and the NEF initiates positioning for the UE 2 and the UE 3, to obtain the absolute locations of the UE 2 and the UE 3. The NEF determines the relative location between the UE 3 and the UE 2 based on the absolute location of the UE 2 and the absolute location of the UE 3. That the NEF initiates positioning for the UE 2 may be specifically: The NEF requests the absolute location of the UE 2 from the GMLC. That the NEF initiates positioning for the UE 3 may be specifically: The NEF requests the absolute location of the UE 3 from the GMLC. The NEF may determine the relative location between the UE 3 and the UE 2 based on the absolute location of the UE 2 and the absolute location of the UE 3.

The foregoing describes a solution in which the first terminal device assists the second terminal device in obtaining the relative location between the third terminal device and the second terminal device, and a solution in which the network device assists the second terminal device in obtaining the relative location between the third terminal device and the second terminal device. The following describes a solution in which a third terminal device assists a second terminal device in obtaining a relative location between the third terminal device and the second terminal device.

FIG. 11 is a schematic diagram of another location determining method 1100 according to an embodiment of this application. The method 1100 may include the following steps.

S 1101: A second terminal device sends an eleventh message to a third terminal device.

The eleventh message may be used to trigger the third terminal device to send a first relative location, or the eleventh message may be used to request a first relative location.

Correspondingly, the third terminal device receives the eleventh message from the second terminal device.

For the first relative location, refer to the foregoing description. Details are not described again.

A type of the eleventh message is a PC5-RRC message or a PC5-S message.

The eleventh message may be an existing message, for example, a link modification request (link modification request) message; or the eleventh message may be a newly defined message. The newly defined message may be referred to as a location request message or a relative location request message. This is not limited.

For example, the eleventh message is a link modification request message. In a possible implementation, the link modification request message may carry indication information, and the indication information is used to trigger the third terminal device to send the first relative location. The indication information may be implemented by using one or more bits. For example, whether the link modification request message is used to trigger the third terminal device to send the first relative location is indicated by using one bit. For example, if the bit is set to "1", it indicates that the link modification request message triggers the third terminal device to send the first relative location; or if the bit is set to "0", it indicates that the link modification request message does not trigger the third terminal device to send the first relative location. In another possible implementation, if the link modification request message is carried in a specific container (for example, a relative location request container), the link modification request message is used to trigger the third terminal device to send the first relative location.

S1102: The second terminal device receives a twelfth message from the third terminal device.

The twelfth message includes the first relative location.

Optionally, the method 1100 further includes: The third terminal device determines the first relative location. For example, the third terminal device may determine the first relative location based on the eleventh message. The third terminal device receives the eleventh message, which triggers the third terminal device to determine the first relative location. For the first relative location, refer to the foregoing description. Details are not described again.

For determining a relative location between the third terminal device and a first terminal device, refer to the foregoing description of determining the relative location between the UE 1 and the UE 2. Details are not described again.

S1103: The second terminal device determines a second relative location based on the first relative location and a third relative location.

For the third relative location, refer to the foregoing description. Details are not described again.

For example, the second terminal device determines the second relative location based on a relative location (that is, the first relative location) between the third terminal device and the first terminal device that is received in step S1102 and a relative location (that is, the third relative location) between the second terminal device and the first terminal device. The first terminal device obtains a relative location (that is, the second relative location) between the third terminal device and the second terminal device based on the relative location between the third terminal device and the first terminal device and the relative location between the second terminal device and the first terminal device by using a geometric calculation method. In this example, how to obtain the relative location between the third terminal device and the second terminal device by using the geometric calculation method belongs to the conventional technology, and details are not described.

The second terminal device obtains the relative location between the second terminal device and the first terminal device in the following two manners. In a possible manner, the second terminal device determines the relative location between the second terminal device and the first terminal device. In another possible manner, the first terminal device determines the relative location between the second terminal device and the first terminal device, and sends the relative location between the second terminal device and the first terminal device to the second terminal device.

For the relative location between the third terminal device and the first terminal device and the relative location between the second terminal device and the first terminal device, refer to the foregoing description of determining the relative location between the UE 1 and the UE 2. Details are not described again.

Optionally, in an implementation scenario of the foregoing embodiment, the eleventh message in step S1101 includes accuracy of the first relative location. Further, optionally, the method 1100 further includes: The third terminal device determines the first relative location based on the accuracy of the first relative location.

The accuracy of the first relative location may be used by the third terminal device to select an appropriate transmission parameter in a process of determining the first relative location. The transmission parameter may include at least one of the following: a bandwidth for sending a signal and/or receiving a signal, and a beam for sending a signal and/or receiving a signal (for example, a beam width for sending a signal and/or receiving a signal). For example, if the accuracy of the first relative location is high, it indicates that an error between the first relative location determined by the third terminal device and an actual first relative location is small. Therefore, when the third terminal device determines the first relative location, a signal may be sent and/or a signal may be received by using a large bandwidth (because a larger bandwidth of a signal indicates a shorter slot length for transmitting the signal and a more accurate calculated distance), and/or a signal may be sent and/or a signal may be received by using a fine beam (because a finer beam indicates a more accurate direction).

For the accuracy of the first relative location, refer to the foregoing description. Details are not described again.

Optionally, the eleventh message in step S1101 includes the accuracy of the first relative location, and the method 1100 further includes: The second terminal device obtains the accuracy of the first relative location and accuracy of the third relative location based on accuracy of the second relative location.

A distance is used as an example. If the accuracy of the second relative location includes accuracy of the distance, and the accuracy of the distance is less than or equal to m, the second terminal device may determine that the accuracy of the first relative location is less than or equal to *a*₁*m, and the accuracy of the second relative location is less than or equal to *a*₂*m. *a*₁ and *a*₂ are numbers greater than 0 and less than 1. For example, a sum of *a*₁ and *a*₂ is less than or equal to 1. For example, *a*₁ and *a*₂ are 0.5. Specifically, an error between a distance between the third terminal device and the first terminal device that is determined by the third terminal device (that is, a distance between the third terminal device and the first terminal device that is measured by the third terminal device) and an actual distance between the third terminal device and the first terminal device is less than or equal to *a*₁*m; and an error between a distance between the second terminal device and the first terminal device that is determined by the second terminal device (that is, a distance between the second terminal device and the first terminal device that is measured by the second terminal device) and an actual distance between the second terminal device and the first terminal device is less than or equal to a₂*m.

An angle is used as an example. If the accuracy of the second relative location includes accuracy of the angle, and the accuracy of the angle is less than or equal to d, the second terminal device may determine that the accuracy of the first relative location is less than or equal to *b*₁*d, and the accuracy of the second relative location is less than or equal to *b*₂*d. *b*₁ and *b*₂ are numbers greater than 0 and less than 1. For example, a sum of *b*₁ and *b*₂ is less than or equal to 1. For example, *b*₁ and *b*₂ are 0.5. Specifically, an error between an angle between the third terminal device and the first terminal device that is determined by the third terminal device (that is, an angle between the third terminal device and the first terminal device that is measured by the third terminal device) and an actual angle between the third terminal device and the first terminal device is less than or equal to *b*₁*d; and an error between an angle between the second terminal device and the first terminal device that is determined by the second terminal device (that is, an angle between the second terminal device and the first terminal device that is measured by the second terminal device) and an actual angle between the second terminal device and the first terminal device is less than or equal to *b*₂*d.

Optionally, in another implementation scenario of the foregoing embodiment, the method 1100 further includes: The first terminal device sends a third message. For the third message, refer to the description in the method 300. Details are not described herein again. The third message may include information about the third terminal device, and the information about the third terminal device may be, for example, an identifier of the third terminal device. Further, step S1101 may include: The second terminal device receives the third message from the first terminal device, and if the third message includes the information about the third terminal device, the second terminal device sends the eleventh message to the third terminal device.

For example, the first terminal device establishes a communication connection to one or more terminal devices, and the one or more terminal devices include the third terminal device. The first terminal device sends the third message, the third message is used to broadcast the information about the terminal device that establishes the communication connection to the first terminal device (that is, information about the one or more terminal devices), and the information that is broadcast in the third message and that is about the terminal device that establishes the communication connection to the first terminal device includes the information about the third terminal device (for example, the identifier of the third terminal device). After receiving the third message from the first terminal device, the second terminal device may send the eleventh message to the third terminal device, to request the relative location between the third terminal device and the first terminal device.

For another example, the first terminal device has learned of absolute locations of one or more terminal devices, and the one or more terminal devices include the third terminal device. The first terminal device sends the third message, the third message is used to broadcast information about the terminal device whose absolute location has been learned of by the first terminal device (that is, information about the one or more terminal devices), and the information that is broadcast in the third message and that is about the terminal device whose absolute location has been learned of by the first terminal device includes the information about the third terminal device (for example, the identifier of the third terminal device). After receiving the third message from the first terminal device, the second terminal device may send the eleventh message to the third terminal device, to request the relative location between the third terminal device and the first terminal device.

For another example, the first terminal device has learned of relative locations between the first terminal device and one or more terminal devices, and the one or more terminal devices include the third terminal device. The first terminal device sends the third message, the third message is used to broadcast information about the terminal device whose relative location has been learned of by the first terminal device (that is, information about the one or more terminal devices), and the information that is broadcast in the third message and that is about the terminal device whose relative location has been learned of by the first terminal device includes the information about the third terminal device (for example, the identifier of the third terminal device). After receiving the third message from the first terminal device, the second terminal device may send the eleventh message to the third terminal device, to request the relative location between the third terminal device and the first terminal device.

Optionally, in another implementation scenario of the foregoing embodiment, the method 1100 further includes: The second terminal device sends a fourth message, where the fourth message is used to discover a terminal device that assists in positioning the third terminal device.

The fourth message may include information about the third terminal device.

Correspondingly, the second terminal device receives a response message for the fourth message from the first terminal device.

For the fourth message, refer to the description in the method 300. Details are not described herein again.

Optionally, in another implementation scenario of the foregoing embodiment, the eleventh message includes information about the first terminal device.

The information about the first terminal device is used by the third terminal device to identify the first terminal device to determine a relative location, that is, the third terminal device determines the relative location between the third terminal device and the first terminal device.

Optionally, in another implementation scenario of the foregoing embodiment, the eleventh message includes a positioning time (positioning time), and the positioning time represents a time for determining the first relative location. The time for determining the first relative location may also be understood as an obtaining time or a calculation time of the first relative location. After the third terminal device receives the positioning time, the third terminal device determines the first relative location based on the positioning time. Further, optionally, the method 1100 further includes: The second terminal device determines the third relative location based on the positioning time.

The positioning time may also be referred to as a scheduled positioning time (scheduled positioning time), and the positioning time may be a moment or a time period. This is not limited.

That "the second terminal device determines the third relative location based on the positioning time" may include any one of the following cases.

In a first possible case, the second terminal device determines the relative location between the second terminal device and the first terminal device at the positioning time (that is, at the foregoing moment or within the foregoing time period). For example, the second terminal device sends a distance measurement signal to the first terminal device at the positioning time, the first terminal device sends a feedback signal to the second terminal device after receiving the distance measurement signal, and the second terminal device calculates a distance between the second terminal device and the first terminal device based on a time difference between sending the distance measurement signal and receiving the feedback signal. For another example, the second terminal device sends the positioning time to the first terminal device, the first terminal device sends a distance measurement signal to the second terminal device at the positioning time, and the second terminal device determines an angle or a direction between the second terminal device and the first terminal device based on the received distance measurement signal.

In a second possible case, the second terminal device determines the relative location between the second terminal device and the first terminal device within a preset time period before the positioning time. For example, the second terminal device sends a distance measurement signal to the first terminal device within the preset time period before the positioning time, the first terminal device sends a feedback signal to the second terminal device after receiving the distance measurement signal, and the second terminal device calculates a distance between the second terminal device and the first terminal device based on a time difference between sending the distance measurement signal and receiving the feedback signal. For another example, the second terminal device sends the positioning time to the first terminal device, the first terminal device sends a distance measurement signal to the second terminal device within the preset time period before the positioning time, and the second terminal device determines an angle or a direction between the second terminal device and the first terminal device based on the received distance measurement signal.

The foregoing two cases are mainly described by using an example in which the second terminal device determines the third relative location. As described above, the first terminal device may also determine the third relative location, and send the third relative location to the second terminal device. If the first terminal device determines the third relative location, and sends the third relative location to the second terminal device, the method 1100 further includes: The second terminal device sends the positioning time to the first terminal device, and the first terminal device determines the third relative location based on the positioning time. For a solution in which the first terminal device determines the third relative location based on the positioning time, refer to the foregoing two cases. Details are not described herein again.

That "the third terminal device determines the first relative location based on the positioning time" may include any one of the following cases.

In a first possible case, the third terminal device determines the relative location between the third terminal device and the first terminal device based on the positioning time. For details, refer to the description of the first possible case in which the second terminal device determines the third relative location based on the positioning time.

In a second possible case, the third terminal device determines the relative location between the third terminal device and the first terminal device within a preset time period before the positioning time. For details, refer to the description of the second possible case in which the second terminal device determines the third relative location based on the positioning time.

Optionally, in another implementation scenario of the foregoing embodiment, the eleventh message in step S1101 includes accuracy of the first relative location and a positioning time. Further, optionally, the method 1100 further includes: The third terminal device determines the first relative location based on the accuracy of the first relative location and the positioning time.

In a first example, the accuracy of the first relative location is accuracy of a distance. It is assumed that the accuracy of the first relative location is less than or equal to *a*₁*m.

In a first possible case, the third terminal device determines the relative location between the third terminal device and the first terminal device based on the positioning time, and an error between a distance between the third terminal device and the first terminal device that is determined by the third terminal device based on the positioning time and an actual distance between the third terminal device and the first terminal device is less than or equal to *a*₁*m.

In a second possible case, the third terminal device determines the relative location between the third terminal device and the first terminal device within the preset time period before the positioning time, and an error between a distance between the third terminal device and the first terminal device that is determined by the third terminal device within the preset time period before the positioning time and an actual distance between the third terminal device and the first terminal device is less than or equal to *a*₁*m.

In a second example, the accuracy of the first relative location is accuracy of an angle. It is assumed that the accuracy of the first relative location is less than or equal to bi*d.

In a first possible case, the third terminal device determines the relative location between the third terminal device and the first terminal device based on the positioning time, and an error between an angle between the third terminal device and the first terminal device that is determined by the third terminal device based on the positioning time and an actual angle between the third terminal device and the first terminal device is less than or equal to bi*d.

In a second possible case, the third terminal device determines the relative location between the third terminal device and the first terminal device within the preset time period before the positioning time, and an error between an angle between the third terminal device and the first terminal device that is determined by the third terminal device within the preset time period before the positioning time and an actual angle between the third terminal device and the first terminal device is less than or equal to bi*d.

It should be noted that the first example and the second example may be combined. This is not limited.

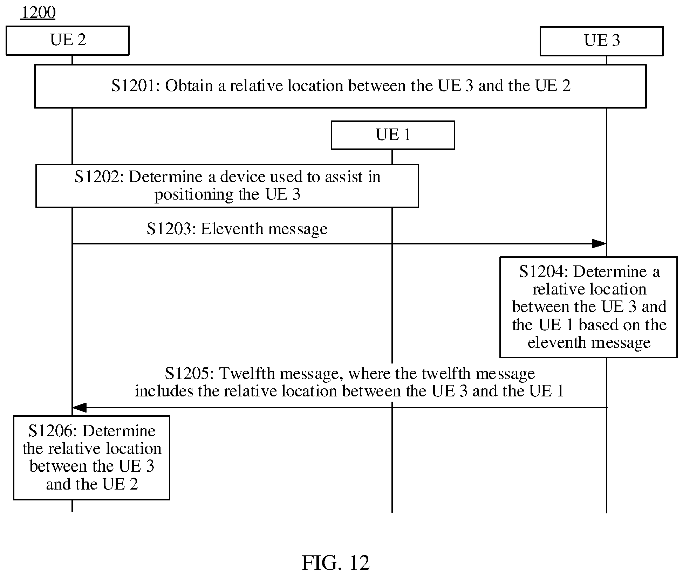

For ease of understanding, the following describes embodiments of this application by using an example with reference to FIG. 12. In the following example, it is assumed that the first terminal device is UE 1, the second terminal device is UE 2, and the third terminal device is UE 3. For specific steps, refer to the foregoing description.

FIG. 12 is a schematic flowchart of a location determining method 1200 according to an embodiment of this application. The method 1200 may be used in a scenario in which UE 2 determines a relative location between UE 3 and UE 2. The method 1200 may include the following steps.

S1201: The UE 2 determines the relative location between the UE 3 and the UE 2.

S1202: The UE 2 determines a device used to assist in positioning the UE 3.

Steps S1201 and S1202 are similar to steps S501 and S502, and details are not described herein again.

S1203: The UE 2 sends an eleventh message to the UE 3.

The eleventh message may be used to trigger the UE 3 to send a relative location between the UE 3 and UE 1, or the eleventh message may be used to request a relative location between the UE 3 and UE 1. The relative location between the UE 3 and the UE 1 includes at least one of the following: a distance between the UE 3 and the UE 1 or an angle between the UE 3 and the UE 1.

Optionally, the eleventh message includes at least one of the following: accuracy of the relative location between the UE 3 and the UE 1, an identifier of the UE 1, or a positioning time.

The accuracy of the relative location between the UE 3 and the UE 1 may include at least one of the following: accuracy of a distance between the UE 3 and the UE 1 or accuracy of an angle between the UE 3 and the UE 1. For example, the accuracy of the distance between the UE 3 and the UE 1 is less than or equal to m, that is, an error between the measured distance between the UE 3 and the UE 1 and an actual distance between the UE 3 and the UE 1 does not exceed m. For another example, the accuracy of the angle between the UE 3 and the UE 1 is less than or equal to d, that is, an error between the measured angle between the UE 3 and the UE 1 and an actual angle between the UE 3 and the UE 1 does not exceed d.

For the accuracy and the positioning time, refer to the foregoing related descriptions. Details are not described again.

In step S1203, the UE 2 may directly send the eleventh message to the UE 3, or if there is no communication connection between the UE 2 and the UE 3, the UE 2 may send the eleventh message to the UE 3 through the UE 1, that is, the UE 1 may serve as relay UE (relay UE) between the UE 2 and the UE 3. That the UE 2 sends the eleventh message to the UE 3 through the UE 1 includes: The UE 2 sends the eleventh message to the UE 1, and the UE 1 sends the eleventh message to the UE 3.

S 1204: The UE 3 determines the relative location between the UE 3 and the UE 1 based on the eleventh message.

In a possible manner, relative positioning is performed between the UE 3 and the UE 1, to determine the relative location between the UE 3 and the UE 1.

Optionally, if the eleventh message in step S1203 includes the accuracy of the relative location between the UE 3 and the UE 1, step S1204 includes: The UE 3 determines the relative location between the UE 3 and the UE 1 based on the accuracy of the relative location between the UE 3 and the UE 1.

A distance is used as an example. Specifically, if the accuracy of the relative location between the UE 3 and the UE 1 includes accuracy of the distance, and the accuracy of the distance is less than 0.4 meters, an error between the distance between the UE 3 and the UE 1 that is determined by the UE 3 and an actual distance between the UE 3 and the UE 1 is less than 0.4 meters. It should be understood that 0.4 meters herein are used as an example for description, and this application is not limited thereto.

An angle is used as an example. Specifically, if the accuracy of the relative location between the UE 3 and the UE 1 includes accuracy of the angle, and the accuracy of the angle is less than 1 degree, an error between the angle between the UE 3 and the UE 1 that is determined by the UE 3 and an actual angle between the UE 3 and the UE 1 is less than 1 degree. It should be understood that 1 degree herein is an example for description, and this application is not limited thereto.

Optionally, if the eleventh message in step S1203 includes the positioning time, S1204 includes: The UE 3 determines the relative location between the UE 3 and the UE 1 at the positioning time.

Optionally, if the eleventh message in step S 1203 includes the positioning time and the accuracy of the relative location between the UE 3 and the UE 1, S1204 includes: The UE 3 determines the relative location between the UE 3 and the UE 1 based on the accuracy of the relative location between the UE 3 and the UE 1 at the positioning time.

S1205: The UE 3 sends a twelfth message to the UE 2, where the twelfth message includes the relative location between the UE 3 and the UE 1.

The eleventh message in step S1203 is used to request the relative location between the UE 3 and the UE 1. Therefore, step S1205 includes: The UE 3 sends the twelfth message to the UE 2, where the twelfth message includes the relative location between the UE 3 and the UE 1.

S1206: The UE 2 determines the relative location between the UE 3 and the UE 2.

That the UE 2 determines the relative location between the UE 3 and the UE 2 may include: The UE 2 determines the relative location between the UE 3 and the UE 2 based on the relative location between the UE 3 and the UE 1 and a relative location between the UE 2 and the UE 1.

The relative location between the UE 2 and the UE 1 may be obtained in the following manners.

In one manner, the UE 2 determines the relative location between the UE 2 and the UE 1. Specifically, the UE 2 performs relative positioning with the UE 1, to determine the relative location between the UE 2 and the UE 1. Based on this manner, if the eleventh message in step S1203 includes the positioning time, further optionally, the UE 2 determines the relative location between the UE 2 and the UE 1 at the positioning time.

In another manner, the UE 2 obtains the relative location between the UE 2 and the UE 1 from the UE 1.

Based on the foregoing solution, if the UE 2 cannot determine the relative location between the UE 3 and the UE 2, or if the accuracy of the relative location between the UE 2 and the UE 3 is low, the UE 2 may obtain the relative location between the UE 3 and the UE 2 with assistance of the UE 3. Specifically, the UE 2 sends the eleventh message to the UE 3, to request the relative location between the UE 3 and the UE 1. The UE 3 determines the relative location between the UE 3 and the UE 1 based on the eleventh message, and sends the relative location between the UE 3 and the UE 1 to the UE 2. The UE 2 determines the relative location between the UE 3 and the UE 2 based on the relative location between the UE 3 and the UE 1 and the relative location between the UE 2 and the UE 1. Therefore, not only relative positioning between the UE 2 and the UE 3 can be implemented, but also precision of the relative location between the UE 2 and the UE 3 can be improved.

It may be understood that the examples in FIG. 5 to FIG. 12 in embodiments of this application are merely intended to help a person skilled in the art understand embodiments of this application, but are not intended to limit embodiments of this application to specific scenarios in the examples. It is clear that a person skilled in the art can make various equivalent modifications or changes according to the examples in FIG. 5 to FIG. 12, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application. For example, in the method 900, step S902 may be performed simultaneously with steps S903 to S906, that is, the UE 2 may obtain the absolute location of the UE 2 and the absolute location of the UE 3 at the same time.

It may be further understood that some message names in embodiments of this application do not limit the protection scope of embodiments of this application.

It may be further understood that in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

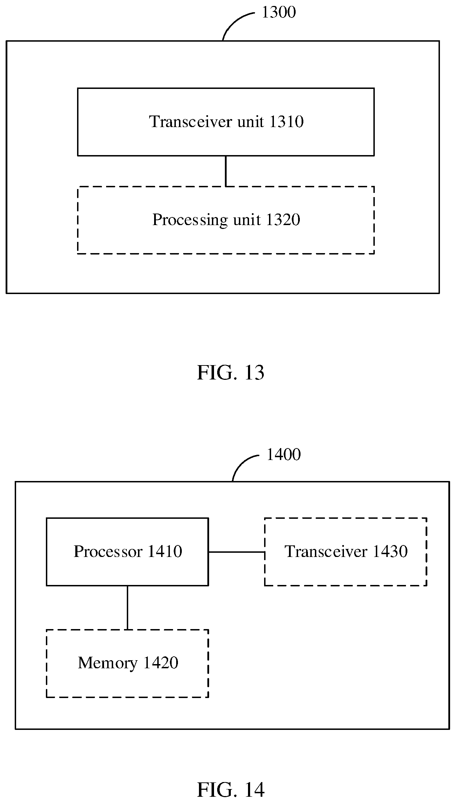

FIG. 13 is a schematic block diagram of a location determining apparatus according to an embodiment of this application. The apparatus 1300 includes a transceiver unit 1310. The transceiver unit 1310 may be configured to implement a corresponding communication function. The transceiver unit 1310 may also be referred to as a communication interface or a communication unit.

Optionally, the apparatus 1300 further includes a processing unit 1320. The processing unit 1320 may be configured to process data.

Optionally, the apparatus 1300 further includes a storage unit. The storage unit may be configured to store instructions and/or data. The processing unit 1320 may read the instructions and/or the data in the storage unit, so that the apparatus implements actions of the network device or different terminal devices in the foregoing method embodiments.

In a first design, the apparatus 1300 may be the first terminal device in the foregoing embodiments, or may be a component (for example, a chip) of the first terminal device. The apparatus 1300 may implement steps or procedures performed by the first terminal device in the foregoing method embodiments. The transceiver unit 1310 may be configured to perform receiving/sending-related operations of the first terminal device in the foregoing method embodiments. The processing unit 1320 may be configured to perform processing-related operations of the first terminal device in the foregoing method embodiments.

In a possible implementation, the transceiver unit 1310 is configured to receive a first message from a second terminal device, where the first message is used to request a first target location, the first target location includes at least one of the following: a first relative location, an absolute location of a third terminal device, or a second relative location, the first relative location represents a relative location between the third terminal device and the first terminal device, and the second relative location represents a relative location between the third terminal device and the second terminal device; and the transceiver unit 1310 is further configured to send a second message to the second terminal device based on the first message, where the second message includes the first target location.

Optionally, the processing unit 1320 is configured to determine the first target location.

Optionally, the first target location includes the second relative location; and that the processing unit 1320 is configured to determine the first target location includes: The processing unit 1320 is configured to: determine the first relative location; determine a third relative location, where the third relative location represents a relative location between the second terminal device and the first terminal device; and determine the second relative location based on the first relative location and the third relative location.

Optionally, the first target location includes the second relative location; and that the processing unit 1320 is configured to determine the first target location includes: The processing unit 1320 is configured to: determine an absolute location of the second terminal device; determine the absolute location of the third terminal device; and determine the second relative location based on the absolute location of the second terminal device and the absolute location of the third terminal device.

Optionally, the first target location includes the absolute location of the third terminal device; and that the processing unit 1320 is configured to determine the first target location includes: The processing unit 1320 is configured to: determine the first relative location; and determine the absolute location of the third terminal device based on the first relative location and an absolute location of the first terminal device.

Optionally, the first message includes accuracy of the first target location, and the processing unit 1320 is configured to determine the first target location based on the accuracy of the first target location.

Optionally, the first target location includes the second relative location, and the processing unit 1320 is configured to obtain first accuracy and second accuracy based on the accuracy of the first target location; and that the processing unit 1320 is configured to determine the first target location based on the accuracy of the first target location includes: The processing unit 1320 is configured to: determine the first relative location based on the first accuracy; determine a third relative location based on the second accuracy; and determine the second relative location based on the first relative location and the third relative location.

Optionally, the first message includes first information, the first information is used to trigger the first terminal device to send the first target location to the third terminal device, and the transceiver unit 1310 is further configured to send the first target location to the third terminal device.

Optionally, the first target location includes the second relative location, and the first message includes a threshold of the second relative location; and that the transceiver unit 1310 is configured to send a second message to the second terminal device includes: The transceiver unit 1310 is configured to send the second message to the second terminal device based on the second relative location and the threshold of the second relative location, where the second message includes the second relative location.

Optionally, the transceiver unit 1310 is further configured to send a third message, where the third message is used to broadcast information about a terminal device that establishes a communication connection to the first terminal device, or the third message is used to broadcast information about a terminal device whose location has been learned of by the first terminal device. The third message includes information about the third terminal device.

Optionally, the transceiver unit 1310 is further configured to receive a fourth message from the second terminal device, where the fourth message is used to discover a terminal device that assists in positioning the third terminal device, and the fourth message includes information about the third terminal device; and if the first terminal device satisfies a preset condition, the transceiver unit 1310 is further configured to send a response message for the fourth message to the second terminal device.

Optionally, the first relative location includes at least one of the following: a distance or an angle; and the second relative location includes at least one of the following: a distance or an angle.

In a second design, the apparatus 1300 may be the second terminal device in the foregoing embodiments, or may be a component (for example, a chip) of the second terminal device. The apparatus 1300 may implement steps or procedures performed by the second terminal device in the foregoing method embodiments. The transceiver unit 1310 is configured to perform receiving/sending-related operations of the second terminal device in the foregoing method embodiments. The processing unit 1320 is configured to perform processing-related operations of the second terminal device in the foregoing method embodiments.

In a possible implementation, the transceiver unit 1310 is configured to send a first message to a first terminal device, where the first message is used to request a first target location, the first target location includes at least one of the following: a first relative location, an absolute location of a third terminal device, or a second relative location, the first relative location represents a relative location between the third terminal device and the first terminal device, and the second relative location represents a relative location between the third terminal device and the second terminal device; the transceiver unit 1310 is further configured to receive a second message from the first terminal device, where the second message includes the first target location; and the processing unit 1320 is configured to obtain the second relative location based on the second message.

Optionally, the first message includes at least one of the following: accuracy of the first target location, a threshold of the second relative location, or first information, and the first information is used to trigger the first terminal device to send the first target location to the third terminal device.

Optionally, that the transceiver unit 1310 is configured to send a first message to a first terminal device includes: If a relative location between the third terminal device and the second terminal device that is stored in the second terminal device does not satisfy a preset condition, the transceiver unit 1310 is configured to send the first message to the first terminal device.

Optionally, the transceiver unit 1310 is further configured to receive a third message from the first terminal device, where the third message is used to broadcast information about a terminal device that establishes a communication connection to the first terminal device, or the third message is used to broadcast information about a terminal device whose location has been learned of by the first terminal device, where the third message includes information about the third terminal device.

Optionally, before the second terminal device sends the first message to the first terminal device, the transceiver unit 1310 is further configured to: send a fourth message, where the fourth message is used to discover a terminal device that assists in positioning the third terminal device, and the fourth message includes information about the third terminal device; and receive a response message for the fourth message from the first terminal device.

Optionally, the second relative location includes at least one of the following: a distance or an angle.

In another possible implementation, the transceiver unit 1310 is configured to send a fifth message to a network device, where the fifth message is used to trigger sending of a second target location to a second terminal device, the second target location includes at least one of the following: a second relative location or an absolute location of a third terminal device, and the second relative location represents a relative location between the third terminal device and the second terminal device; the transceiver unit 1310 is further configured to receive a sixth message from the network device, where the sixth message includes the second target location; and the processing unit 1320 is configured to obtain the second relative location based on the sixth message.

Optionally, the fifth message includes at least one of the following: accuracy of the second target location, a threshold of the second relative location, or second information, and the second information is used to trigger the network device to send the second target location to the third terminal device.

Optionally, that the transceiver unit 1310 is configured to send a fifth message to a network device includes: If a relative location between the third terminal device and the second terminal device that is stored in the second terminal device does not satisfy a preset condition, the transceiver unit 1310 is configured to send the fifth message to the network device.

Optionally, the second relative location includes at least one of the following: a distance or an angle.

In another possible implementation, the transceiver unit 1310 is configured to send an eleventh message to a third terminal device, where the eleventh message is used to trigger the third terminal device to send a first relative location, and the first relative location represents a relative location between the third terminal device and a first terminal device; the transceiver unit 1310 is further configured to receive a twelfth message from the third terminal device, where the twelfth message includes the first relative location; and the processing unit 1320 is configured to determine a second relative location based on the first relative location and a third relative location, where the third relative location represents a relative location between a second terminal device and the first terminal device, and the second relative location represents a relative location between the third terminal device and the second terminal device.

Optionally, the processing unit 1320 is further configured to determine the third relative location.

Optionally, the eleventh message includes accuracy of the first relative location.

Optionally, the processing unit 1320 is further configured to obtain the accuracy of the first relative location and accuracy of the third relative location based on accuracy of the second relative location.

Optionally, the transceiver unit 1310 is further configured to receive a third message from the first terminal device, where the third message is used to broadcast information about a terminal device that establishes a communication connection to the first terminal device, or the third message is used to broadcast information about a terminal device whose location has been learned of by the first terminal device, where the third message includes information about the third terminal device.

Optionally, the transceiver unit 1310 is further configured to send a fourth message, where the fourth message is used to discover a terminal device that assists in positioning the third terminal device, and the fourth message includes information about the third terminal device; and the transceiver unit 1310 is further configured to receive a response message for the fourth message from the first terminal device.

Optionally, the eleventh message includes information about the first terminal device.

Optionally, the eleventh message includes a positioning time, and the positioning time represents a time for determining the first relative location.

Optionally, the first relative location includes at least one of the following: a distance or an angle; the second relative location includes at least one of the following: a distance or an angle; and the third relative location includes at least one of the following: a distance or an angle.

In a third design, the apparatus 1300 may be the network device in the foregoing embodiments, or may be a component (for example, a chip) of the network device. The apparatus 1300 may implement steps or procedures performed by the network device in the foregoing method embodiments. The transceiver unit 1310 is configured to perform receiving/sending-related operations of the network device in the foregoing method embodiments. The processing unit 1320 is configured to perform processing-related operations of the network device in the foregoing method embodiments.

In a possible implementation, the transceiver unit 1310 is configured to receive a fifth message from a second terminal device, where the fifth message is used to trigger sending of a second target location to the second terminal device, the second target location includes at least one of the following: a second relative location or an absolute location of a third terminal device, and the second relative location represents a relative location between the third terminal device and the second terminal device; and the transceiver unit 1310 is further configured to send a sixth message to the second terminal device based on the fifth message, where the sixth message includes the second target location.

Optionally, the processing unit 1320 is configured to determine the second target location.

Optionally, the second target location includes the second relative location; and that the processing unit 1320 is configured to determine the second target location includes: The processing unit 1320 is configured to: determine an absolute location of the second terminal device; determine the absolute location of the third terminal device; and determine the second relative location based on the absolute location of the second terminal device and the absolute location of the third terminal device.

Optionally, the fifth message includes at least one of the following: accuracy of the second target location, a threshold of the second relative location, or second information, and the second information is used to trigger the network device to send the second target location to the third terminal device.

Optionally, when the fifth message includes the accuracy of the second target location, the processing unit 1320 is configured to determine the second target location based on the accuracy of the second target location.

Optionally, the second target location includes the absolute location of the third terminal device and an absolute location of the second terminal device; and that the processing unit 1320 is configured to determine the second target location based on the accuracy of the second target location includes: The processing unit 1320 is configured to: obtain third accuracy and fourth accuracy based on the accuracy of the second target location; determine the absolute location of the second terminal device based on the third accuracy; and determine the absolute location of the third terminal device based on the fourth accuracy.

Optionally, when the fifth message includes the second information, the transceiver unit 1310 is further configured to send the second target location to the third terminal device.

Optionally, the second target location includes the second relative location, and when the fifth message includes the threshold of the second relative location, that the transceiver unit 1310 is configured to send a sixth message to the second terminal device, where the sixth message includes the second target location includes: The transceiver unit 1310 is configured to send the sixth message to the second terminal device based on the second relative location and the threshold of the second relative location, where the sixth message includes the second relative location.

Optionally, the second relative location includes at least one of the following: a distance or an angle.

In a fourth design, the apparatus 1300 may be the third terminal device in the foregoing embodiments, or may be a component (for example, a chip) of the third terminal device. The apparatus 1300 may implement steps or procedures performed by the third terminal device in the foregoing method embodiments. The transceiver unit 1310 is configured to perform receiving/sending-related operations of the third terminal device in the foregoing method embodiments. The processing unit 1320 is configured to perform processing-related operations of the third terminal device in the foregoing method embodiments.

In a possible implementation, the transceiver unit 1310 is configured to receive an eleventh message from a second terminal device, where the eleventh message is used to trigger the third terminal device to send a first relative location, and the first relative location represents a relative location between the third terminal device and a first terminal device; and the transceiver unit 1310 is further configured to send a twelfth message to the second terminal device, where the twelfth message includes the first relative location.

Optionally, the processing unit 1320 is configured to determine the first relative location.

Optionally, the eleventh message includes accuracy of the first relative location; and that the processing unit 1320 is configured to determine the first relative location includes: The processing unit 1320 is configured to determine the first relative location based on the accuracy of the first relative location.

Optionally, the eleventh message includes information about the first terminal device.

Optionally, the eleventh message includes a positioning time, and the positioning time represents a time for determining the first relative location; and that the processing unit 1320 is configured to determine the first relative location includes: The processing unit 1320 is configured to determine the first relative location based on the positioning time.

Optionally, the first relative location includes at least one of the following: a distance or an angle.

It should be understood that a specific process in which the units perform the foregoing corresponding steps is described in detail in the foregoing method embodiments. For brevity, details are not described herein.

It should be understood that the apparatus 1300 herein is embodied in a form of a function unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1300 may be specifically the first terminal device in the foregoing embodiments, and may be configured to perform procedures and/or steps corresponding to the first terminal device in the foregoing method embodiments; or the apparatus 1300 may be specifically the second terminal device in the foregoing embodiments, and may be configured to perform procedures and/or steps corresponding to the second terminal device in the foregoing method embodiments. To avoid repetition, details are not described herein again.

The apparatus 1300 in the foregoing solutions has a function of implementing corresponding steps performed by a terminal device (for example, the first terminal device or the second terminal device) in the foregoing methods, or the apparatus 1300 in the foregoing solutions has a function of implementing corresponding steps performed by a network device in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1310 may alternatively be a transceiver circuit (for example, the transceiver circuit may include a receiver circuit and a transmitter circuit), and the processing unit may be a processing circuit.

It should be noted that the apparatus in FIG. 13 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

As shown in FIG. 14, an embodiment of this application provides another location determining apparatus 1400. The apparatus 1400 includes a processor 1410. The processor 1410 is configured to execute a computer program or instructions stored in the memory 1420, or read data stored in the memory 1420, to perform the methods in the foregoing method embodiments. Optionally, there are one or more processors 1410.

Optionally, as shown in FIG. 14, the apparatus 1400 further includes the memory 1420. The memory 1420 is configured to store the computer program or instructions and/or data. The memory 1420 may be integrated with the processor 1410, or may be disposed separately. Optionally, there are one or more memories 1420.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

In a solution, the apparatus 1400 is configured to implement operations performed by a terminal device in the foregoing method embodiments.

For example, the processor 1410 is configured to execute the computer program or the instructions stored in the memory 1420, to implement related operations of the first terminal device in the foregoing method embodiments, for example, the method performed by the first terminal device in the embodiment shown in FIG. 3, or the method performed by the UE 1 in the embodiment shown in either of FIG. 5 and FIG. 6.

For another example, the processor 1410 is configured to execute the computer program or the instructions stored in the memory 1420, to implement related operations of the second terminal device in the foregoing method embodiments, for example, the method performed by the second terminal device in the embodiment shown in FIG. 3, FIG. 4, or FIG. 11, or the method performed by the UE 2 in the embodiment shown in any one of FIG. 5 to FIG. 10 and FIG. 12.

For another example, the processor 1410 is configured to execute the computer program or the instructions stored in the memory 1420, to implement related operations of the third terminal device in the foregoing method embodiments, for example, the method performed by the third terminal device in the embodiment shown in FIG. 11, or the method performed by the UE 3 in the embodiment shown in FIG. 12.

In another solution, the apparatus 1400 is configured to implement operations performed by a network device in the foregoing method embodiments.

For example, the processor 1410 is configured to execute the computer program or the instructions stored in the memory 1420, to implement related operations of the network device in the foregoing method embodiments, for example, the method performed by the network device in the embodiment shown in FIG. 4, or the method performed by the AMF or the GMLC in the embodiment shown in any one of FIG. 7 to FIG. 10.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

An embodiment of this application further provides a computer-readable storage medium. The computer-readable storage medium stores computer instructions used to implement the method performed by the terminal device or the network device in the foregoing method embodiments.

For example, when the computer program is executed by a computer, the computer is enabled to implement the method performed by the first terminal device or the second terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a location determining system, including one or more of the foregoing first terminal device, second terminal device, third terminal device, network device, and AF (for example, an LCS client).

For explanations and advantageous effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A location determining method, comprising:
receiving, by a first terminal device, a first message from a second terminal device, wherein the first message is used to request a first target location, the first target location comprises at least one of the following: a first relative location, an absolute location of a third terminal device, or a second relative location, the first relative location represents a relative location between the third terminal device and the first terminal device, and the second relative location represents a relative location between the third terminal device and the second terminal device; and
sending, by the first terminal device, a second message to the second terminal device based on the first message, wherein the second message comprises the first target location.

2. The method according to claim 1, wherein the method further comprises:
determining, by the first terminal device, the first target location.

3. The method according to claim 2, wherein the first target location comprises the second relative location; and
the determining, by the first terminal device, the first target location comprises:
determining, by the first terminal device, the first relative location;
determining, by the first terminal device, a third relative location, wherein the third relative location represents a relative location between the second terminal device and the first terminal device; and
determining, by the first terminal device, the second relative location based on the first relative location and the third relative location.

4. The method according to claim 2, wherein the first target location comprises the second relative location; and
the determining, by the first terminal device, the first target location comprises:
obtaining, by the first terminal device, an absolute location of the second terminal device;
obtaining, by the first terminal device, the absolute location of the third terminal device; and
determining, by the first terminal device, the second relative location based on the absolute location of the second terminal device and the absolute location of the third terminal device.

5. The method according to claim 2, wherein the first target location comprises the absolute location of the third terminal device; and
the determining, by the first terminal device, the first target location comprises:
determining, by the first terminal device, the first relative location; and
determining, by the first terminal device, the absolute location of the third terminal device based on the first relative location and an absolute location of the first terminal device.

6. The method according to claim 1, wherein the first message comprises accuracy of the first target location, and the method further comprises:
determining, by the first terminal device, the first target location based on the accuracy of the first target location.

7. The method according to claim 6, wherein the first target location comprises the second relative location, and the method further comprises:
obtaining, by the first terminal device, first accuracy and second accuracy based on the accuracy of the first target location; and
the determining, by the first terminal device, the first target location based on the accuracy of the first target location comprises:
determining, by the first terminal device, the first relative location based on the first accuracy;
determining, by the first terminal device, a third relative location based on the second accuracy; and
determining, by the first terminal device, the second relative location based on the first relative location and the third relative location.

8. The method according to any one of claims 1 to 7, wherein the first message comprises first information, the first information is used to trigger the first terminal device to send the first target location to the third terminal device, and the method further comprises:
sending, by the first terminal device, the first target location to the third terminal device.

9. The method according to any one of claims 1 to 8, wherein the first target location comprises the second relative location, and the first message comprises a threshold of the second relative location; and
the sending, by the first terminal device, a second message to the second terminal device based on the first message comprises:
sending, by the first terminal device, the second message to the second terminal device based on the second relative location and the threshold of the second relative location, wherein the second message comprises the second relative location.

10. The method according to any one of claims 1 to 9, wherein the method further comprises:
sending, by the first terminal device, a third message, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

11. The method according to any one of claims 1 to 9, wherein the method further comprises:
receiving, by the first terminal device, a fourth message from the second terminal device, wherein the fourth message is used to discover a terminal device that assists in positioning the third terminal device, and the fourth message comprises information about the third terminal device; and
if the first terminal device satisfies a preset condition, sending, by the first terminal device, a response message for the fourth message to the second terminal device.

12. The method according to any one of claims 1 to 11, wherein the first relative location comprises at least one of the following: a distance or an angle; and the second relative location comprises at least one of the following: a distance or an angle.

13. A location determining method, comprising:
sending, by a second terminal device, a first message to a first terminal device, wherein the first message is used to request a first target location, the first target location comprises at least one of the following: a first relative location, an absolute location of a third terminal device, or a second relative location, the first relative location represents a relative location between the third terminal device and the first terminal device, and the second relative location represents a relative location between the third terminal device and the second terminal device;
receiving, by the second terminal device, a second message from the first terminal device, wherein the second message comprises the first target location; and
obtaining, by the second terminal device, the second relative location based on the second message.

14. The method according to claim 13, wherein the first message comprises at least one of the following:
accuracy of the first target location, a threshold of the second relative location, or first information, wherein
the first information is used to trigger the first terminal device to send the first target location to the third terminal device.

15. The method according to claim 13 or 14, wherein the sending, by a second terminal device, a first message to a first terminal device comprises:
if a relative location between the third terminal device and the second terminal device that is stored in the second terminal device does not satisfy a preset condition, sending, by the second terminal device, the first message to the first terminal device.

16. The method according to any one of claims 13 to 15, wherein the method further comprises:
receiving, by the second terminal device, a third message from the first terminal device, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

17. The method according to any one of claims 13 to 15, wherein before the sending, by a second terminal device, a first message to a first terminal device, the method further comprises:
sending, by the second terminal device, a fourth message, wherein the fourth message is used to discover a terminal device that assists in positioning the third terminal device, and the fourth message comprises information about the third terminal device; and
receiving, by the second terminal device, a response message for the fourth message from the first terminal device.

18. The method according to any one of claims 13 to 17, wherein the second relative location comprises at least one of the following: a distance or an angle.

19. A location determining method, comprising:
receiving, by a network device, a fifth message from a second terminal device, wherein the fifth message is used to trigger sending of a second target location to the second terminal device, the second target location comprises at least one of the following: a second relative location or an absolute location of a third terminal device, and the second relative location represents a relative location between the third terminal device and the second terminal device; and
sending, by the network device, a sixth message to the second terminal device based on the fifth message, wherein the sixth message comprises the second target location.

20. The method according to claim 19, wherein the method further comprises:
determining, by the network device, the second target location.

21. The method according to claim 20, wherein the second target location comprises the second relative location; and
the determining, by the network device, the second target location comprises:
determining, by the network device, an absolute location of the second terminal device;
determining, by the network device, the absolute location of the third terminal device; and
determining, by the network device, the second relative location based on the absolute location of the second terminal device and the absolute location of the third terminal device.

22. The method according to claim 19, wherein the fifth message comprises accuracy of the second target location, and the method further comprises:
determining, by the network device, the second target location based on the accuracy of the second target location.

23. The method according to claim 22, wherein the second target location comprises the absolute location of the third terminal device and an absolute location of the second terminal device; and
the determining, by the network device, the second target location based on the accuracy of the second target location comprises:
obtaining, by the network device, third accuracy and fourth accuracy based on the accuracy of the second target location;
determining, by the network device, the absolute location of the second terminal device based on the third accuracy; and
determining, by the network device, the absolute location of the third terminal device based on the fourth accuracy.

24. The method according to any one of claims 19 to 23, wherein the fifth message comprises second information, the second information is used to trigger the network device to send the second target location to the third terminal device, and the method further comprises:
sending, by the network device, the second target location to the third terminal device.

25. The method according to any one of claims 19 to 24, wherein the second target location comprises the second relative location, and the fifth message comprises a threshold of the second relative location; and
the sending, by the network device, a sixth message to the second terminal device based on the fifth message comprises:
sending, by the network device, the sixth message to the second terminal device based on the second relative location and the threshold of the second relative location, wherein the sixth message comprises the second relative location.

26. The method according to any one of claims 19 to 25, wherein the second relative location comprises at least one of the following: a distance or an angle.

27. A location determining method, comprising:
sending, by a second terminal device, a fifth message to a network device, wherein the fifth message is used to trigger sending of a second target location to the second terminal device, the second target location comprises at least one of the following: a second relative location or an absolute location of a third terminal device, and the second relative location represents a relative location between the third terminal device and the second terminal device;
receiving, by the second terminal device, a sixth message from the network device, wherein the sixth message comprises the second target location; and
obtaining, by the second terminal device, the second relative location based on the sixth message.

28. The method according to claim 27, wherein the fifth message comprises at least one of the following:
accuracy of the second target location, a threshold of the second relative location, or second information, wherein
the second information is used to trigger the network device to send the second target location to the third terminal device.

29. The method according to claim 27 or 28, wherein the sending, by a second terminal device, a fifth message to a network device comprises:
if a relative location between the third terminal device and the second terminal device that is stored in the second terminal device does not satisfy a preset condition, sending, by the second terminal device, the fifth message to the network device.

30. The method according to any one of claims 27 to 29, wherein the second relative location comprises at least one of the following: a distance or an angle.

31. A location determining method, comprising:
sending, by a second terminal device, an eleventh message to a third terminal device, wherein the eleventh message is used to trigger the third terminal device to send a first relative location, and the first relative location represents a relative location between the third terminal device and a first terminal device;
receiving, by the second terminal device, a twelfth message from the third terminal device, wherein the twelfth message comprises the first relative location; and
determining, by the second terminal device, a second relative location based on the first relative location and a third relative location, wherein the third relative location represents a relative location between the second terminal device and the first terminal device, and the second relative location represents a relative location between the third terminal device and the second terminal device.

32. The method according to claim 31, wherein the method further comprises:
determining, by the second terminal device, the third relative location.

33. The method according to claim 31 or 32, wherein the eleventh message comprises accuracy of the first relative location.

34. The method according to claim 33, wherein before the sending, by a second terminal device, an eleventh message to a third terminal device, the method further comprises:
obtaining, by the second terminal device, the accuracy of the first relative location and accuracy of the third relative location based on accuracy of the second relative location.

35. The method according to any one of claims 31 to 34, wherein the method further comprises:
receiving, by the second terminal device, a third message from the first terminal device, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

36. The method according to any one of claims 31 to 34, wherein before the sending, by a second terminal device, an eleventh message to a third terminal device, the method further comprises:
sending, by the second terminal device, a fourth message, wherein the fourth message is used to discover a terminal device that assists in positioning the third terminal device, and the fourth message comprises information about the third terminal device; and
receiving, by the second terminal device, a response message for the fourth message from the first terminal device.

37. The method according to any one of claims 31 to 36, wherein the eleventh message comprises information about the first terminal device.

38. The method according to any one of claims 31 to 37, wherein the eleventh message comprises a positioning time, and the positioning time represents a time for determining the first relative location.

39. The method according to any one of claims 31 to 38, wherein the first relative location comprises at least one of the following: a distance or an angle; the second relative location comprises at least one of the following: a distance or an angle; and the third relative location comprises at least one of the following: a distance or an angle.

40. A location determining method, comprising:
receiving, by a third terminal device, an eleventh message from a second terminal device, wherein the eleventh message is used to trigger the third terminal device to send a first relative location, and the first relative location represents a relative location between the third terminal device and a first terminal device; and
sending, by the third terminal device, a twelfth message to the second terminal device, wherein the twelfth message comprises the first relative location.

41. The method according to claim 40, wherein the method further comprises:
determining, by the third terminal device, the first relative location.

42. The method according to claim 41, wherein the eleventh message comprises accuracy of the first relative location; and
the determining, by the third terminal device, the first relative location comprises:
determining, by the third terminal device, the first relative location based on the accuracy of the first relative location.

43. The method according to any one of claims 40 to 42, wherein the eleventh message comprises information about the first terminal device.

44. The method according to claim 41 or 42, wherein the eleventh message comprises a positioning time, the positioning time represents a time for determining the first relative location, and the determining, by the third terminal device, the first relative location comprises:
determining, by the third terminal device, the first relative location based on the positioning time.

45. The method according to any one of claims 40 to 44, wherein the first relative location comprises at least one of the following: a distance or an angle.

46. A location determining apparatus, comprising a transceiver unit, wherein
the transceiver unit is configured to receive a first message from a second terminal device, wherein the first message is used to request a first target location, the first target location comprises at least one of the following: a first relative location, an absolute location of a third terminal device, or a second relative location, the first relative location represents a relative location between the third terminal device and a first terminal device, and the second relative location represents a relative location between the third terminal device and the second terminal device; and
the transceiver unit is further configured to send a second message to the second terminal device based on the first message, wherein the second message comprises the first target location.

47. The apparatus according to claim 46, wherein the apparatus further comprises a processing unit, and the processing unit is configured to determine the first target location.

48. The apparatus according to claim 47, wherein the first target location comprises the second relative location; and
that the processing unit is configured to determine the first target location comprises:
the processing unit is configured to: determine the first relative location and a third relative location, wherein the third relative location represents a relative location between the second terminal device and the first terminal device; and determine the second relative location based on the first relative location and the third relative location.

49. The apparatus according to claim 47, wherein the first target location comprises the second relative location; and
that the processing unit is configured to determine the first target location comprises:
the processing unit is configured to: obtain an absolute location of the second terminal device and the absolute location of the third terminal device; and determine the second relative location based on the absolute location of the second terminal device and the absolute location of the third terminal device.

50. The apparatus according to claim 47, wherein the first target location comprises the absolute location of the third terminal device; and
that the processing unit is configured to determine the first target location comprises:
the processing unit is configured to: determine the first relative location; and determine the absolute location of the third terminal device based on the first relative location and an absolute location of the first terminal device.

51. The apparatus according to claim 46, wherein the first message comprises accuracy of the first target location, the apparatus further comprises a processing unit, and the processing unit is configured to determine the first target location based on the accuracy of the first target location.

52. The apparatus according to claim 51, wherein the first target location comprises the second relative location, and the processing unit is further configured to obtain first accuracy and second accuracy based on the accuracy of the first target location; and
that the processing unit is configured to determine the first target location based on the accuracy of the first target location comprises:
the processing unit is configured to: determine the first relative location based on the first accuracy; determine a third relative location based on the second accuracy; and determine the second relative location based on the first relative location and the third relative location.

53. The apparatus according to any one of claims 46 to 52, wherein the first message comprises first information, the first information is used to trigger the first terminal device to send the first target location to the third terminal device, and the transceiver unit is further configured to send the first target location to the third terminal device.

54. The apparatus according to any one of claims 46 to 53, wherein the first target location comprises the second relative location, and the first message comprises a threshold of the second relative location; and
that the transceiver unit is further configured to send a second message to the second terminal device based on the first message comprises:
the transceiver unit is further configured to send the second message to the second terminal device based on the second relative location and the threshold of the second relative location, wherein the second message comprises the second relative location.

55. The apparatus according to any one of claims 46 to 54, wherein the transceiver unit is further configured to send a third message, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

56. The apparatus according to any one of claims 46 to 54, wherein the transceiver unit is further configured to receive a fourth message from the second terminal device, wherein the fourth message is used to discover a terminal device that assists in positioning the third terminal device, and the fourth message comprises information about the third terminal device; and
if the first terminal device satisfies a preset condition, the transceiver unit is further configured to send a response message for the fourth message to the second terminal device.

57. The apparatus according to any one of claims 46 to 56, wherein the first relative location comprises at least one of the following: a distance or an angle; and the second relative location comprises at least one of the following: a distance or an angle.

58. A location determining apparatus, comprising a transceiver unit and a processing unit, wherein
the transceiver unit is configured to send a first message to a first terminal device, wherein the first message is used to request a first target location, the first target location comprises at least one of the following: a first relative location, an absolute location of a third terminal device, or a second relative location, the first relative location represents a relative location between the third terminal device and the first terminal device, and the second relative location represents a relative location between the third terminal device and a second terminal device;
the transceiver unit is further configured to receive a second message from the first terminal device, wherein the second message comprises the first target location; and
the processing unit is configured to obtain the second relative location based on the second message.

59. The apparatus according to claim 58, wherein the first message comprises at least one of the following:
accuracy of the first target location, a threshold of the second relative location, or first information, wherein
the first information is used to trigger the first terminal device to send the first target location to the third terminal device.

60. The apparatus according to claim 58 or 59, wherein that the transceiver unit is configured to send a first message to a first terminal device comprises:
if a relative location between the third terminal device and the second terminal device that is stored in the second terminal device does not satisfy a preset condition, the transceiver unit is configured to send the first message to the first terminal device.

61. The apparatus according to any one of claims 58 to 60, wherein the transceiver unit is further configured to receive a third message from the first terminal device, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

62. The apparatus according to any one of claims 58 to 60, wherein
the transceiver unit is further configured to send a fourth message, wherein the fourth message is used to discover a terminal device that assists in positioning the third terminal device, and the fourth message comprises information about the third terminal device; and
the transceiver unit is further configured to receive a response message for the fourth message from the first terminal device.

63. The apparatus according to any one of claims 58 to 62, wherein the second relative location comprises at least one of the following: a distance or an angle.

64. A location determining apparatus, comprising a transceiver unit, wherein
the transceiver unit is configured to receive a fifth message from a second terminal device, wherein the fifth message is used to trigger sending of a second target location to the second terminal device, the second target location comprises at least one of the following: a second relative location or an absolute location of a third terminal device, and the second relative location represents a relative location between the third terminal device and the second terminal device; and
the transceiver unit is further configured to send a sixth message to the second terminal device based on the fifth message, wherein the sixth message comprises the second target location.

65. The apparatus according to claim 64, wherein the apparatus further comprises a processing unit, and the processing unit is configured to determine the second target location.

66. The apparatus according to claim 65, wherein the second target location comprises the second relative location; and
that the processing unit is configured to determine the second target location comprises:
the processing unit is configured to: determine an absolute location of the second terminal device; determine the absolute location of the third terminal device; and determine the second relative location based on the absolute location of the second terminal device and the absolute location of the third terminal device.

67. The apparatus according to claim 64, wherein the fifth message comprises accuracy of the second target location, the apparatus further comprises a processing unit, and the processing unit is configured to determine the second target location based on the accuracy of the second target location.

68. The apparatus according to claim 67, wherein the second target location comprises the absolute location of the third terminal device and an absolute location of the second terminal device;
and
that the processing unit is configured to determine the second target location based on the accuracy of the second target location comprises:
the processing unit is configured to: obtain third accuracy and fourth accuracy based on the accuracy of the second target location; determine the absolute location of the second terminal device based on the third accuracy; and determine the absolute location of the third terminal device based on the fourth accuracy.

69. The apparatus according to any one of claims 64 to 68, wherein the fifth message comprises second information, the second information is used to trigger a network device to send the second target location to the third terminal device, and the transceiver unit is further configured to send the second target location to the third terminal device.

70. The apparatus according to any one of claims 64 to 69, wherein the second target location comprises the second relative location, and the fifth message comprises a threshold of the second relative location; and
that the transceiver unit is further configured to send a sixth message to the second terminal device based on the fifth message comprises:
the transceiver unit is further configured to send the sixth message to the second terminal device based on the second relative location and the threshold of the second relative location, wherein the sixth message comprises the second relative location.

71. The apparatus according to any one of claims 64 to 70, wherein the second relative location comprises at least one of the following: a distance or an angle.

72. A location determining apparatus, comprising a transceiver unit and a processing unit, wherein
the transceiver unit is configured to send a fifth message to a network device, wherein the fifth message is used to trigger sending of a second target location to a second terminal device, the second target location comprises at least one of the following: a second relative location or an absolute location of a third terminal device, and the second relative location represents a relative location between the third terminal device and the second terminal device;
the transceiver unit is further configured to receive a sixth message from the network device, wherein the sixth message comprises the second target location; and
the processing unit is configured to obtain the second relative location based on the sixth message.

73. The apparatus according to claim 72, wherein the fifth message comprises at least one of the following:
accuracy of the second target location, a threshold of the second relative location, or second information, wherein
the second information is used to trigger the network device to send the second target location to the third terminal device.

74. The apparatus according to claim 72 or 73, wherein that the transceiver unit is configured to send a fifth message to a network device comprises:
if a relative location between the third terminal device and the second terminal device that is stored in the second terminal device does not satisfy a preset condition, the transceiver unit is configured to send the fifth message to the network device.

75. The apparatus according to any one of claims 72 to 74, wherein the second relative location comprises at least one of the following: a distance or an angle.

76. A location determining apparatus, comprising a transceiver unit and a processing unit, wherein
the transceiver unit is configured to send an eleventh message to a third terminal device, wherein the eleventh message is used to trigger the third terminal device to send a first relative location, and the first relative location represents a relative location between the third terminal device and a first terminal device;
the transceiver unit is further configured to receive a twelfth message from the third terminal device, wherein the twelfth message comprises the first relative location; and
the processing unit is configured to determine a second relative location based on the first relative location and a third relative location, wherein the third relative location represents a relative location between a second terminal device and the first terminal device, and the second relative location represents a relative location between the third terminal device and the second terminal device.

77. The apparatus according to claim 76, wherein the processing unit is further configured to determine the third relative location.

78. The apparatus according to claim 76 or 77, wherein the eleventh message comprises accuracy of the first relative location.

79. The apparatus according to claim 78, wherein the processing unit is further configured to obtain the accuracy of the first relative location and accuracy of the third relative location based on accuracy of the second relative location.

80. The apparatus according to any one of claims 76 to 79, wherein the transceiver unit is further configured to receive a third message from the first terminal device, wherein the third message is used to broadcast information about a terminal device that establishes a communication connection to the first terminal device, or the third message is used to broadcast information about a terminal device whose location has been learned of by the first terminal device, wherein
the third message comprises information about the third terminal device.

81. The apparatus according to any one of claims 76 to 79, wherein
the transceiver unit is further configured to send a fourth message, wherein the fourth message is used to discover a terminal device that assists in positioning the third terminal device, and the fourth message comprises information about the third terminal device; and
the transceiver unit is further configured to receive a response message for the fourth message from the first terminal device.

82. The apparatus according to any one of claims 76 to 81, wherein the eleventh message comprises information about the first terminal device.

83. The apparatus according to any one of claims 76 to 82, wherein the eleventh message comprises a positioning time, and the positioning time represents a time for determining the first relative location.

84. The apparatus according to any one of claims 76 to 83, wherein the first relative location comprises at least one of the following: a distance or an angle; the second relative location comprises at least one of the following: a distance or an angle; and the third relative location comprises at least one of the following: a distance or an angle.

85. A location determining apparatus, comprising a transceiver unit, wherein
the transceiver unit is configured to receive an eleventh message from a second terminal device, wherein the eleventh message is used to trigger a third terminal device to send a first relative location, and the first relative location represents a relative location between the third terminal device and a first terminal device; and
the transceiver unit is further configured to send a twelfth message to the second terminal device, wherein the twelfth message comprises the first relative location.

86. The apparatus according to claim 85, wherein the apparatus further comprises a processing unit, and the processing unit is configured to determine the first relative location.

87. The apparatus according to claim 86, wherein the eleventh message comprises accuracy of the first relative location; and
that the processing unit is configured to determine the first relative location comprises:
the processing unit is configured to determine the first relative location based on the accuracy of the first relative location.

88. The apparatus according to any one of claims 85 to 87, wherein the eleventh message comprises information about the first terminal device.

89. The apparatus according to claim 86 or 87, wherein the eleventh message comprises a positioning time, and the positioning time represents a time for determining the first relative location; and
that the processing unit is configured to determine the first relative location comprises:
the processing unit is configured to determine the first relative location based on the positioning time.

90. The apparatus according to any one of claims 84 to 89, wherein the first relative location comprises at least one of the following: a distance or an angle.

91. A location determining apparatus, comprising:
a processor, configured to execute a computer program stored in a memory, so that the apparatus performs the method according to any one of claims 1 to 45.

92. The apparatus according to claim 91, wherein the apparatus further comprises the memory.

93. The apparatus according to claim 91 or 92, wherein the apparatus further comprises a communication interface, and the communication interface is coupled to the processor; and
the communication interface is configured to input and/or output information.

94. The apparatus according to any one of claims 91 to 93, wherein the apparatus is a chip.

95. A computer-readable storage medium, wherein the computer-readable storage medium stores a computer program, and when the computer program is run on a computer, the computer is enabled to perform the method according to any one of claims 1 to 45.

96. A computer program product, wherein the computer program product comprises instructions for performing the method according to any one of claims 1 to 45.

97. A location determining system, comprising a first terminal device and a second terminal device, wherein
the first terminal device is configured to perform the method according to any one of claims 1 to 12; and
the second terminal device is configured to perform the method according to any one of claims 13 to 18.

98. A location determining system, comprising a second terminal device and a network device, wherein
the network device is configured to perform the method according to any one of claims 19 to 26; and
the second terminal device is configured to perform the method according to any one of claims 27 to 30.

99. A location determining system, comprising a second terminal device and a third terminal device, wherein
the second terminal device is configured to perform the method according to any one of claims 31 to 39; and
the third terminal device is configured to perform the method according to any one of claims 40 to 45.
